# EUROPEAN PATENT APPLICATION

(11) **EP 4 701 140 A1**
(43) Date of publication of application: **25.02.2026**
(21) Application number: 24809970.7
(22) Date of filing: 06.02.2024
(51) Int. Cl.: H04L 12/46, H04L 69/22

(54) **MESSAGE FORWARDING METHOD, APPARATUS AND SYSTEM**

(30) Priority: 19.05.2023 CN 202310575254
(71) Applicant: Huawei Technologies Co., Ltd., Shenzhen, Guangdong 518129 (CN)
(72) Inventor: ZHANG, Dasheng, Shenzhen, Guangdong 518129 (CN); YANG, Pingan, Shenzhen, Guangdong 518129 (CN); SHENG, Cheng, Shenzhen, Guangdong 518129 (CN); GAO, Liangchuan, Shenzhen, Guangdong 518129 (CN); REN, Huajun, Shenzhen, Guangdong 518129 (CN); DING, Chenglong, Shenzhen, Guangdong 518129 (CN); ZHANG, Can, Shenzhen, Guangdong 518129 (CN)
(74) Representative: MERH-IP Matias Erny Reichl Hoffmann Patentanwälte PartG mbB
(86) International application number: PCT/CN2024/076352
(87) International publication number: WO 2024/239721

(57) **Abstract**

A packet forwarding method and apparatus, and a system are provided, and belong to the field of network technologies. A first network node located at a boundary between a first network domain and a second network domain receives a first packet from the first network domain, where the first packet includes a first packet header that matches the first network domain, and the first packet header includes a first slice identifier that indicates a first network slice. The first network node obtains a second packet based on the second network domain and the first packet, where the second packet includes a second packet header that matches the second network domain, the second packet header includes a second slice identifier that indicates a second network slice, and the second packet header is different from the first packet header. The first network node sends the second packet in the second network domain based on the second slice identifier. In this application, cross-domain interworking between network slices can be implemented.

## Description

This application claims priority to Chinese Patent Application No. 202310575254.5, filed on May 19, 2023 and entitled "PACKET FORWARDING METHOD AND APPARATUS, AND SYSTEM", which is incorporated herein by reference in its entirety.

### TECHNICAL FIELD

This application relates to the field of network technologies, and in particular, to a packet forwarding method and apparatus, and a system.

### BACKGROUND

A network slice (slice) is a virtual network obtained by performing resource division on a physical network. Different network slices obtained by dividing a same physical network are isolated from each other, and different network slices are used to meet requirements of different services. A network node may forward a packet via the network slice, to prevent packets of different services from preempting resources of each other.

In a mainstream slicing technology, a slice identifier is carried in a packet to direct the packet to a network slice indicated by the slice identifier for forwarding. However, currently, a manner of carrying the slice identifier in the packet cannot implement cross-domain interworking between network slices.

### SUMMARY

This application provides a packet forwarding method and apparatus, and a system. Technical solutions of this application are as follows.

According to a first aspect, a packet forwarding method is provided, and applied to a first network node at a boundary between a first network domain and a second network domain. The method includes: The first network node receives a first packet from the first network domain, where the first packet includes a first packet header that matches the first network domain, and the first packet header includes a first slice identifier (slice identifier, slice ID) that indicates a first network slice. The first network node obtains a second packet based on the second network domain and the first packet, where the second packet includes a second packet header that matches the second network domain, the second packet header includes a second slice identifier that indicates a second network slice, and the second packet header is different from the first packet header. The first network node sends the second packet in the second network domain based on the second slice identifier. The first network slice is deployed in the first network domain, and the second network slice is deployed in the second network domain.

According to the technical solution provided in this application, the first packet from the first network domain includes the first packet header that matches the first network domain, and the first packet header includes the first slice identifier that indicates the first network slice. After receiving the first packet, the first network node at the boundary between the first network domain and the second network domain obtains the second packet based on the second network domain and the first packet and sends the second packet in the second network domain based on the second slice identifier that is in the second packet header included in the second packet and that indicates the second network slice, so that the first network node can implement switching between the first network slice in the first network domain and the second network slice in the second network domain, to implement cross-domain interworking between the first network slice and the second network slice, avoid complex configuration and forwarding efficiency deterioration caused because the network node performs service reidentification when a packet crosses domains, and improve packet forwarding efficiency.

Optionally, that the first network node obtains a second packet based on the second network domain and the first packet includes: The first network node determines the second slice identifier based on the first slice identifier and a first mapping relationship, where the first mapping relationship includes a mapping relationship between the first slice identifier and the second slice identifier. The first network node obtains the second packet based on the first packet, the second slice identifier, and the second network domain. For example, the first network node encapsulates the first packet based on the second network domain and the second slice identifier to obtain the second packet.

According to the technical solution provided in this application, the first network node determines, based on the first mapping relationship and the first slice identifier in the first packet header included in the first packet, the second slice identifier that indicates the second network slice, so that the first network node can implement the switching between the first slice identifier and the second slice identifier, to implement the cross-domain interworking between the first network slice and the second network slice, avoid the complex configuration and the forwarding efficiency deterioration caused because the network node performs service reidentification when the packet crosses domains, and improve the packet forwarding efficiency.

Optionally, the first network domain is a virtual local area network (virtual local area network, VLAN) domain, the first packet is a VLAN packet, the first packet header is an Ethernet (ethernet, ETH) header, and a slice indication field in the ETH header is used to carry the first slice identifier. The second network domain is a virtual extensible local area network (virtual extensible local area network, VXLAN) domain, the second packet is a VXLAN packet, the second packet header is a VXLAN header, and a reserved field or an extended field in the VXLAN header is used to carry the second slice identifier.

According to the technical solution provided in this application, when the first network domain is the VLAN domain and the second network domain is the VXLAN domain, that the first network node implements cross-domain interworking between the first network slice in the first network domain and the second network slice in the second network domain is to implement cross-VLAN domain and cross-VXLAN domain interworking between the first network slice and the second network slice. Therefore, in this application, cross-VLAN domain and cross-VXLAN domain interworking between network slices can be implemented. In addition, in this application, a slice identifier may be carried in the ETH header or the VXLAN header, and a network node may forward a packet based on the slice identifier carried in the ETH header or the VXLAN header. Therefore, the technical solution of this application may be applied to a VLAN network and a VXLAN network.

Optionally, the first network domain is a VLAN domain, the first packet is a VLAN packet, the first packet header is an ETH header, and a slice indication field in the ETH header is used to carry the first slice identifier. The second network domain is a generic network virtualization encapsulation (generic network virtualization encapsulation, GENEVE) domain, the second packet is a GENEVE packet, the second packet header is a GENEVE header, and an extended field in the GENEVE header is used to carry the second slice identifier.

According to the technical solution provided in this application, when the first network domain is the VLAN domain and the second network domain is the GENEVE domain, that the first network node implements cross-domain interworking between the first network slice in the first network domain and the second network slice in the second network domain is to implement cross-VLAN domain and cross-GENEVE domain interworking between the first network slice and the second network slice. Therefore, in this application, cross-VLAN domain and cross-GENEVE domain interworking between network slices can be implemented. In addition, in this application, a slice identifier may be carried in the ETH header or the GENEVE header, and a network node may forward a packet based on the slice identifier carried in the ETH header or the GENEVE header. Therefore, the technical solution of this application may be applied to a VLAN network and a GENEVE network.

Optionally, the first network domain is a VLAN domain, the first packet is a VLAN packet, the first packet header is an ETH header, and a slice indication field in the ETH header is used to carry the first slice identifier. The second network domain is a segment routing (segment routing, SRv6) over internet protocol version 6 (internet protocol version 6, IPv6) domain, the second packet is an SRv6 packet, the second packet header is a hop-by-hop options header (hop-by-hop options header, HBH) or a destination options header (destination options header, DOH), and the HBH or the DOH is used to carry the second slice identifier.

According to the technical solution provided in this application, when the first network domain is the VLAN domain and the second network domain is the SRv6 domain, that the first network node implements cross-domain interworking between the first network slice in the first network domain and the second network slice in the second network domain is to implement cross-VLAN domain and cross-SRv6 domain interworking between the first network slice and the second network slice. Therefore, in this application, cross-VLAN domain and cross-SRv6 domain interworking between network slices can be implemented. In addition, in this application, a slice identifier may be carried in the ETH header, the HBH, or the DOH, and a network node may forward a packet based on the slice identifier carried in the ETH header, the HBH, or the DOH. Therefore, the technical solutions of this application may be applied to a VLAN network and an SRv6 network.

Optionally, the first network domain is a VLAN domain, the first packet is a VLAN packet, the first packet header is an ETH header, and a slice indication field in the ETH header is used to carry the first slice identifier. The second network domain is an internet protocol version 6 (internet protocol version 6, IPv6) domain, the second packet is an IPv6 packet, the second packet header is an IPv6 extension header, and the IPv6 extension header is used to carry the second slice identifier.

According to the technical solution provided in this application, when the first network domain is the VLAN domain and the second network domain is the IPv6 domain, that the first network node implements cross-domain interworking between the first network slice in the first network domain and the second network slice in the second network domain is to implement cross-VLAN domain and cross-IPv6 domain interworking between the first network slice and the second network slice. Therefore, in this application, cross-VLAN domain and cross-IPv6 domain interworking between network slices can be implemented. In addition, in this application, a slice identifier may be carried in the ETH header or the IPv6 extension header, and a network node may forward a packet based on the slice identifier carried in the ETH header or the IPv6 extension header. Therefore, the technical solution of this application may be applied to a VLAN network and an IPv6 network.

Optionally, the first network domain is a VXLAN domain, the first packet is a VXLAN packet, the first packet header is a VXLAN header, and a reserved field or an extended field in the VXLAN header is used to carry the first slice identifier. The second network domain is a VLAN domain, the second packet is a VLAN packet, the second packet header is an ETH header, and a slice indication field in the ETH header is used to carry the second slice identifier.

According to the technical solution provided in this application, when the first network domain is the VXLAN domain and the second network domain is the VLAN domain, that the first network node implements cross-domain interworking between the first network slice in the first network domain and the second network slice in the second network domain is to implement cross-VXLAN domain and cross-VLAN domain interworking between the first network slice and the second network slice. Therefore, in this application, cross-VXLAN domain and cross-VLAN domain interworking between network slices can be implemented. In addition, in this application, a slice identifier may be carried in the VXLAN header or the ETH header, and a network node may forward a packet based on the slice identifier carried in the VXLAN header or the ETH header. Therefore, the technical solution of this application may be applied to a VXLAN network and a VLAN network.

Optionally, the first network domain is a GENEVE domain, the first packet is a GENEVE packet, the first packet header is a GENEVE header, and an extended field in the GENEVE header is used to carry the first slice identifier. The second network domain is a VLAN domain, the second packet is a VLAN packet, the second packet header is an Ethernet header, and a slice indication field in the Ethernet header is used to carry the second slice identifier.

According to the technical solution provided in this application, when the first network domain is the GENEVE domain and the second network domain is the VLAN domain, that the first network node implements cross-domain interworking between the first network slice in the first network domain and the second network slice in the second network domain is to implement cross-GENEVE domain and cross-VLAN domain interworking between the first network slice and the second network slice. Therefore, in this application, cross-GENEVE domain and cross-VLAN domain interworking between network slices can be implemented. In addition, in this application, a slice identifier may be carried in the GENEVE header or the ETH header, and a network node may forward a packet based on the slice identifier carried in the GENEVE header or the ETH header. Therefore, the technical solution of this application may be applied to a GENEVE network and a VLAN network.

Optionally, the first network domain is an SRv6 domain, the first packet is an SRv6 packet, the first packet header is an HBH or a DOH, and the HBH or the DOH is used to carry the first slice identifier. The second network domain is a VLAN domain, the second packet is a VLAN packet, the second packet header is an Ethernet header, and a slice indication field in the Ethernet header is used to carry the second slice identifier.

According to the technical solution provided in this application, when the first network domain is the SRv6 domain and the second network domain is the VLAN domain, that the first network node implements cross-domain interworking between the first network slice in the first network domain and the second network slice in the second network domain is to implement cross-SRv6 domain and cross-VLAN domain interworking between the first network slice and the second network slice. Therefore, in this application, cross-SRv6 domain and cross-VLAN domain interworking between network slices can be implemented. In addition, in this application, a slice identifier may be carried in the HBH, the DOH, or the ETH header, and a network node may forward a packet based on the slice identifier carried in the HBH, the DOH, or the ETH header. Therefore, the technical solution of this application may be applied to an SRv6 network and a VLAN network.

Optionally, the first network domain is an IPv6 domain, the first packet is an IPv6 packet, the first packet header is an IPv6 extension header, and the IPv6 extension header is used to carry the first slice identifier. The second network domain is a VLAN domain, the second packet is a VLAN packet, the second packet header is an ETH header, and a slice indication field in the ETH header is used to carry the second slice identifier.

According to the technical solution provided in this application, when the first network domain is the IPv6 domain and the second network domain is the VLAN domain, that the first network node implements cross-domain interworking between the first network slice in the first network domain and the second network slice in the second network domain is to implement cross-IPv6 domain and cross-VLAN domain interworking between the first network slice and the second network slice. Therefore, in this application, cross-IPv6 domain and cross-VLAN domain interworking between network slices can be implemented. In addition, in this application, a slice identifier may be carried in the IPv6 extension header or the ETH header, and a network node may forward a packet based on the slice identifier carried in the IPv6 extension header or the ETH header. Therefore, the technical solution of this application may be applied to an IPv6 network and a VLAN network.

According to a second aspect, a packet forwarding method is provided, and applied to a second network node located at an ingress of a first network domain. The method includes: The second network node obtains a first packet based on an original packet from user equipment, where the first packet includes a first packet header that matches the first network domain, and the first packet header includes a first slice identifier that indicates a first network slice. The second network node sends the first packet in the first network domain based on a second slice identifier. The first network slice is deployed in the first network domain.

Optionally, that the second network node sends the first packet in the first network domain based on the first slice identifier includes: The second network node sends, based on the first slice identifier, the first packet to a first network node located at a boundary between the first network domain and a second network domain, where the second network domain is different from the first network domain. A second network slice is deployed in the second network domain.

According to the technical solution provided in this application, after obtaining the first packet, the second network node located at the ingress of the first network domain sends, based on the first slice identifier in the first packet header included in the first packet, the first packet to the first network node located at the boundary between the first network domain and the second network domain, and after receiving the first packet, the first network node may obtain a second packet based on the second network domain and the first packet and send the second packet in the second network domain based on the second slice identifier that is in a second packet header included in the second packet and that indicates the second network slice, to implement switching between the first network slice in the first network domain and the second network slice in the second network domain, to implement cross-domain interworking between the first network slice and the second network slice, avoid complex configuration and forwarding efficiency deterioration caused because the network node performs service reidentification when the packet crosses domains, and improve packet forwarding efficiency.

Optionally, the first network domain is a VLAN domain, the first packet is a VLAN packet, the first packet header is an ETH header, and a slice indication field in the ETH header is used to carry the first slice identifier.

According to the technical solution provided in this application, when the first network domain is the VLAN domain, a slice identifier may be carried in the ETH header of the VLAN packet, and a network node may forward the VLAN packet based on the slice identifier carried in the ETH header. Therefore, the technical solution of this application may be applied to a VLAN network.

Optionally, the first network domain is a VXLAN domain, the first packet is a VXLAN packet, the first packet header is a VXLAN header, and a reserved field or an extended field in the VXLAN header is used to carry the first slice identifier.

According to the technical solution provided in this application, when the first network domain is the VXLAN domain, a slice identifier may be carried in the VXLAN header of the VXLAN packet, and a network node may forward the VXLAN packet based on the slice identifier carried in the VXLAN header. Therefore, the technical solution of this application may be applied to a VXLAN network.

Optionally, the first network domain is a GENEVE domain, the first packet is a GENEVE packet, the first packet header is a GENEVE header, and an extended field in the GENEVE header is used to carry the first slice identifier.

According to the technical solution provided in this application, when the first network domain is the GENEVE domain, a slice identifier may be carried in the GENEVE header of the GENEVE packet, and a network node may forward the GENEVE packet based on the slice identifier carried in the GENEVE header. Therefore, the technical solution of this application may be applied to a GENEVE network.

Optionally, the first network domain is an SRv6 domain, the first packet is an SRv6 packet, the first packet header is an HBH or a DOH, and the HBH or the DOH is used to carry the first slice identifier.

According to the technical solution provided in this application, when the first network domain is the SRv6 domain, a slice identifier may be carried in the HBH or the DOH of the SRv6 packet, and a network node may forward the SRv6 packet based on the slice identifier carried in the HBH or the DOH. Therefore, the technical solution of this application may be applied to an SRv6 network.

Optionally, the first network domain is an IPv6 domain, the first packet is an IPv6 packet, the first packet header is an IPv6 extension header, and the IPv6 extension header is used to carry the first slice identifier.

According to the technical solution provided in this application, when the first network domain is the IPv6 domain, a slice identifier may be carried in the IPv6 extension header of the IPv6 packet, and a network node may forward the IPv6 packet based on the slice identifier carried in the IPv6 extension header. Therefore, the technical solution of this application may be applied to an IPv6 network.

The VLAN domain provided in the foregoing optional technical solutions of this application is a layer 2 network domain, and correspondingly, the ETH header is a layer 2 packet header. Both the SRv6 domain and the IPv6 domain are layer 3 network domains, and correspondingly, the HBH, the DOH, and the IPv6 extension header are all layer 3 packet headers. Both the VXLAN domain and the GENEVE domain are overlay (overlay) network domains, and correspondingly, both the VXLAN header and the GENEVE domain are overlay packet headers. An overlay network is an overlay virtual network constructed based on an underlay (underlay) network. The underlay network may be a layer 2 network or a layer 3 network. The underlay network is also referred to as an underlay bearer network, an underlay physical network, a lower-layer bearer network, a lower-layer physical network, or the like. The VXLAN domain and the GENEVE domain are merely used as optional implementations of the overlay network domain, and the overlay network domain may further include another overlay virtual network constructed based on the underlay network.

In addition, in the foregoing optional technical solution of this application, when the first network domain is a VLAN domain, the second network domain may be a VXLAN domain, a GENEVE domain, an SRv6 domain, or an IPv6 domain. When the second network domain is a VLAN domain, the first network domain may be a VXLAN domain, a GENEVE domain, an SRv6 domain, or an IPv6 domain. Therefore, a type of the first network domain is different from a type of the second network domain. In addition to the combination manners provided in the foregoing optional technical solutions, a combination manner of the first network domain and the second network domain may alternatively be another combination manner. For example, when the first network domain is a VXLAN domain, the second network domain may be a GENEVE domain, an SRv6 domain, or an IPv6 domain. When the first network domain is a GENEVE domain, the second network domain may be a VXLAN domain, an SRv6 domain, or an IPv6 domain.

According to a third aspect, a packet forwarding apparatus is provided, including modules configured to perform the method provided in any one of the first aspect or the optional manners of the first aspect.

According to a fourth aspect, a packet forwarding apparatus is provided, including modules configured to perform the method provided in any one of the second aspect or the optional manners of the second aspect.

The modules in the third aspect and the fourth aspect may be implemented based on software, hardware, or a combination of software and hardware, and the modules may be randomly combined or divided based on a specific implementation.

According to a fifth aspect, a packet forwarding apparatus is provided, including a memory and a processor. The memory is configured to store a computer program. The processor is configured to execute the computer program stored in the memory, so that the packet forwarding apparatus performs the method provided in any one of the first aspect or the optional manners of the first aspect, or the packet forwarding apparatus performs the method provided in any one of the second aspect or the optional manners of the second aspect.

According to a sixth aspect, a packet forwarding apparatus is provided, including a main control board and an interface board. The main control board and the interface board are configured to implement the method provided in any one of the first aspect or the optional manners of the first aspect, or the main control board and the interface board are configured to implement the method provided in any one of the second aspect or the optional manners of the second aspect.

According to a seventh aspect, a packet forwarding system is provided, including a first network node and a second network node. The first network node includes the packet forwarding apparatus provided in the third aspect, the fifth aspect, or the sixth aspect, and the second network node includes the packet forwarding apparatus provided in the fourth aspect, the fifth aspect, or the sixth aspect.

According to an eighth aspect, a computer-readable storage medium is provided. The computer-readable storage medium stores a computer program. When the computer program is executed, the method provided in any one of the first aspect or the optional manners of the first aspect is implemented, or the method provided in any one of the second aspect or the optional manners of the second aspect is implemented.

According to a ninth aspect, a computer program product is provided. The computer program product includes a program or code. When the program or the code is executed, the method provided in any one of the first aspect or the optional manners of the first aspect is implemented, or the method provided in any one of the second aspect or the optional manners of the second aspect is implemented.

According to a tenth aspect, a chip is provided. The chip includes a programmable logic circuit and/or program instructions. When the chip runs, the chip is configured to implement the method provided in any one of the first aspect or the optional manners of the first aspect, or implement the method provided in any one of the second aspect or the optional manners of the second aspect.

The technical solutions provided in this application bring the following beneficial effects.

According to the technical solution provided in this application, the first packet from the first network domain includes the first packet header that matches the first network domain, and the first packet header includes the first slice identifier that indicates the first network slice. After receiving the first packet, the first network node at the boundary between the first network domain and the second network domain obtains the second packet based on the second network domain and the first packet and sends the second packet in the second network domain based on the second slice identifier that is in the second packet header included in the second packet and that indicates the second network slice, so that the first network node can implement switching between the first network slice in the first network domain and the second network slice in the second network domain, to implement cross-domain interworking between the first network slice and the second network slice, avoid complex configuration and forwarding efficiency deterioration caused because the network node performs service reidentification when a packet crosses domains, and improve packet forwarding efficiency. In addition, in this application, a slice identifier may be carried in a packet header such as an ETH header, a VXLAN header, a GENEVE header, an IPv6 extension header, an HBH, or a DOH, and a network node may forward a packet based on the slice identifier carried in the packet header. Therefore, the technical solutions of this application may be applied to network scenarios such as a VLAN network, a VXLAN network, a GENEVE network, an IPv6 network, and an SRv6 network.

### BRIEF DESCRIPTION OF DRAWINGS

FIG. 1 is a diagram of underlay implementation of a network slice;
FIG. 2 is a diagram of an application scenario according to an embodiment of this application;
FIG. 3 is a diagram of another application scenario according to an embodiment of this application;
FIG. 4 is a diagram of still another application scenario according to an embodiment of this application;
FIG. 5 is a flowchart of a packet forwarding method according to an embodiment of this application;
FIG. 6 is a diagram of an original packet according to an embodiment of this application;
FIG. 7 is a diagram of a first packet according to an embodiment of this application;
FIG. 8 is a diagram of another first packet according to an embodiment of this application;
FIG. 9 is a diagram of still another first packet according to an embodiment of this application;
FIG. 10 is a diagram of yet another first packet according to an embodiment of this application;
FIG. 11 is a diagram of yet another first packet according to an embodiment of this application;
FIG. 12 is a diagram of yet another first packet according to an embodiment of this application;
FIG. 13 is a diagram of yet another first packet according to an embodiment of this application;
FIG. 14 is a diagram of a packet forwarding method according to an embodiment of this application;
FIG. 15 is a diagram of a packet forwarding apparatus according to an embodiment of this application;
FIG. 16 is a diagram of another packet forwarding apparatus according to an embodiment of this application; and
FIG. 17 is a diagram of still another packet forwarding apparatus according to an embodiment of this application.

### DESCRIPTION OF EMBODIMENTS

The following further describes implementations of this application with reference to the accompanying drawings.

An internet protocol (internet protocol, IP) bearer network is a resource sharing network, and causes different services to preempt network resources. To ensure service-level agreement (service-level agreement, SLA) quality of a high-priority service, a quality of service (quality of service, QoS) technology and a hierarchical quality of service (hierarchical quality of service, HQoS) technology are provided. These technologies ensure the SLA quality of the high-priority service by preferentially forwarding the high-priority service. However, in these technologies, a low-priority service still preempts a network resource with the high-priority service, and it is difficult to ensure deterministic SLA quality and service experience of the high-priority service. The high-priority service includes a service with a higher priority and a service of a user with a higher priority, and the low-priority service includes a service with a lower priority and a service of a user with a lower priority. For example, a priority of a video service is higher than a priority of an email service, the video service is a high-priority service, and the email service is a low-priority service. For another example, for a video service 1, a priority of a user A is higher than a priority of a user B, the video service 1 of the user A is a high-priority service, and the video service 1 of the user B is a low-priority service. For still another example, for an email service 2, a priority of a user A is lower than a priority of a user B, the email service 2 of the user A is a low-priority service, and the email service 2 of the user B is a high-priority service.

To provide the deterministic SLA quality for the high-priority service, a slicing technology is provided. The slicing technology is a "hard" isolation technology for resource reservation. In the technology, a network resource is reserved for the high-priority service, so that the high-priority service may exclusively occupy the network resource, and the low-priority service is prevented from preempting the network resource with the high-priority service, to ensure the SLA quality of the high-priority service. The slicing technology is of great value to isolating different services, ensuring the SLA quality of the high-priority service, and the like.

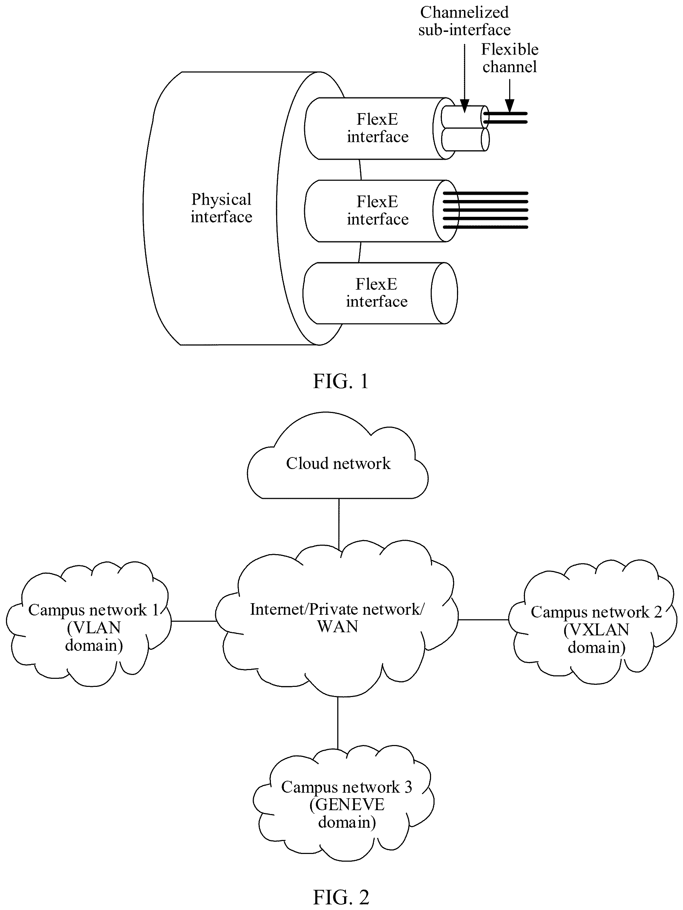

In the slicing technology, underlay technologies used to implement resource reservation and service isolation include a flexible Ethernet (flexible ethernet, FlexE) technology, a channelized sub-interface technology, and a flexible channel (flexible channel, FlexChannel) technology. A common network device (for example, a router or a switch) may support one or more of the three underlay technologies, and the three underlay technologies may be nested for use, to implement "hierarchical slicing". Nested use of the three underlay technologies is shown in FIG. 1. Refer to FIG. 1. One physical interface is divided into a plurality of FlexE interfaces, one FlexE interface is divided into a plurality of channelized sub-interface or a plurality of flexible channels, and one channelized sub-interface may be divided into a plurality of flexible channels. A network slice may be deployed based on a FlexE interface, a channelized sub-interface, or a plurality of flexible channels. A network slice deployed based on the flexible channel or the channelized sub-interface is a sub-slice in a network slice deployed based on a FlexE interface to which the flexible channel or the channelized sub-interface belongs. In this way, the "hierarchical slicing" can be implemented.

Slice control solutions in the industry include a slice control solution based on a flexible algorithm (flexible algorithm, Flex-Algo), a slice control solution based on an interface slice identifier, a slice control solution based on a route affinity attribute, and a slice control solution based on a case in which a slice identifier is carried on a data plane. These slice control solutions are used to control packet forwarding, so that packets of different services are transmitted through different network slice "hard pipes". In both the slice control solution based on a Flex-Algo and the slice control solution based on a route affinity attribute, an interior gateway protocol (interior gateway protocol, IGP) needs to be run in a network. Consequently, the two slice control solutions are highly complex and have limited application scenarios. In the slice control solution based on an interface slice identifier, a slice identifier needs to be configured on an interface of a network device, and actual implementation is complex. In the slice control solution based on a case in which a slice identifier is carried on a data plane, forwarding of a packet is controlled by carrying the slice identifier in the packet. The slice control solution is simple and efficient, and has wider application scenarios. However, currently, in the slice control solution based on a case in which a slice identifier is carried on a data plane, cross-domain interworking between network slices cannot be implemented. Consequently, a network node needs to re-identify a service when a packet crosses domains, and complex configuration needs to be performed in a service identification process. In addition, that the network node re-identifies the service easily affects packet forwarding efficiency, and it is difficult to implement end-to-end (end-to-end, E2E) service slicing assurance. In addition, currently, the slice control solution based on a case in which a slice identifier is carried on a data plane cannot be implemented in a layer 2 network such as a VLAN and an overlay network such as a VXLAN or a GENEVE network. Currently, most campus networks are the VLAN or the VXLAN, and a next-generation VXLAN determined by an international internet engineering task force (Internet Engineering Task Force, IETF) is GENEVE. Therefore, to implement the E2E service slicing assurance, a data plane solution needs to resolve a problem of carrying a slice identifier (slice ID) on a VLAN, VXLAN, or GENEVE data plane. Reasons why most campus networks are layer 2 VLAN networks or virtual large layer 2 networks constructed based on the VXLAN and GENEVE include: Network operation is simplified and plug-and-play (that is, a device may be used immediately when accessing a network) is implemented; for security purposes, the campus network needs to perform identification, authentication, and security source tracing for a terminal, a user, or the like based on MAC; and to flexibly plan and deploy services, an overlay service network needs to be decoupled from an underlay physical network (namely, an underlay network). Campus VLAN, VXLAN, GENEVE layer 2 networking or large layer 2 networking is to exist for a long time and evolve.

An embodiment of this application provides a packet forwarding solution. A network node at a boundary between different network domains may switch a slice identifier carried in a packet when the packet crosses domains, so that switching of the packet between network slices in different network domains is implemented, to implement cross-domain interworking between network slices, avoid complex configuration and forwarding efficiency deterioration caused because the network node performs service reidentification when the packet crosses domains, and improve the packet forwarding efficiency. In addition, different network domains in this application may include a VLAN domain, a VXLAN domain, a GENEVE domain, an SRv6 domain, and an IPv6 domain. Therefore, in this application, cross-VLAN domain, cross-VXLAN domain, cross-GENEVE domain, cross-SRv6 domain, and cross-IPv6 domain interworking between network slices can be implemented, and complex configuration and forwarding efficiency deterioration caused because service reidentification is performed when the packet crosses the VLAN domain, the VXLAN domain, the GENEVE domain, the SRv6 domain, and the IPv6 domain are avoided. In addition, in the packet forwarding solution provided in this application, a slice identifier may be carried in a packet header such as an ETH header, a VXLAN header, a GENEVE header, an IPv6 extension header, an HBH, or a DOH, and a network node may forward a packet based on the slice identifier carried in the packet header. Therefore, the technical solutions of this application may be applied to network scenarios such as a VLAN network, a VXLAN network, a GENEVE network, an IPv6 network, and an SRv6 network.

The following describes the technical solutions of this application, and an application scenario of this application is first described.

An application scenario of embodiments of this application provides a packet forwarding system. The packet forwarding system includes at least two network domains, the at least two network domains are interconnected, and the at least two network domains may include different types of network domains.

Optionally, the at least two network domains include a first network domain and a second network domain, and a type of the first network domain is different from a type of the second network domain. In an example, the first network domain is a VLAN domain, and the second network domain is a VXLAN domain, a GENEVE domain, an SRv6 domain, or an IPv6 domain. In another example, the second network domain is a VLAN domain, and the first network domain is a VXLAN domain, a GENEVE domain, an SRv6 domain, or an IPv6 domain. A combination manner of the first network domain and the second network domain is described herein only as an example. There may alternatively be another combination manner of the first network domain and the second network domain. For example, the first network domain is a VXLAN domain, and the second network domain is a GENEVE domain, an SRv6 domain, or an IPv6 domain. For another example, when the first network domain is a GENEVE domain, the second network domain may be a VXLAN domain, an SRv6 domain, or an IPv6 domain. This is not limited in embodiments of this application.

The VLAN domain is a layer 2 network domain, both the SRv6 domain and the IPv6 domain are layer 3 network domains, and both the VXLAN domain and the GENEVE domain are overlay network domains. The overlay network domain is an overlay virtual network constructed based on an underlay (underlay) network. The overlay network domain is also referred to as an overlay virtual network domain, an overlay service network domain, or the like. The underlay network may be a layer 2 network or a layer 3 network. The underlay network is also referred to as an underlay bearer network, an underlay physical network, a lower-layer bearer network, a lower-layer physical network, or the like. Optionally, the layer 3 network domain is an internet, a carrier private network, a wide area network (wide area network, WAN), a software-defined wide area network (software-defined wide area network, SDWAN), or the like.

Optionally, the at least two network domains further include a cloud network. The cloud network is configured to provide various cloud services, and the cloud services may include a cloud computing service, a cloud storage service, and the like. In this application, the at least two network domains include a campus network. The campus network may be the VLAN domain, the VXLAN domain, or the GENEVE domain. Different campus networks are directly interconnected, or different campus networks are interconnected via the SRv6 domain, the IPv6 domain, or the like, so that different campus networks may access each other. The campus network may be interconnected with the cloud network via the SRv6 domain, the IPv6 domain, or the like, so that the campus network may access the various cloud services provided by the cloud network.

Each of the at least two network domains includes a plurality of network nodes. The network node may be a physical node or a virtual node. The physical node may be a network device such as a switch or a router. The virtual node may be a virtual switch, a virtual router, or the like created on the physical node. A network node in the cloud network may be a cloud server, each cloud server may provide at least one cloud service, and a plurality of cloud servers are interconnected to form the cloud network.

For example, FIG. 2 is a diagram of a packet forwarding system according to an embodiment of this application. The packet forwarding system includes campus networks 1 to 3 (namely, a campus network 1, a campus network 2, and a campus network 3), an internet/private network/WAN (namely, the internet, the private network, or the WAN), and a cloud network. The campus network 1 is a VLAN domain. The campus network 2 is a VXLAN domain. The campus network 3 is a GENEVE domain. The campus networks 1 to 3 and the cloud network are interconnected through the internet/private network/WAN. Any two network domains in the campus networks 1 to 3 may access each other via the internet/private network/WAN, and the campus networks 1 to 3 may access, via the internet/private network/WAN, a cloud service provided by the cloud network.

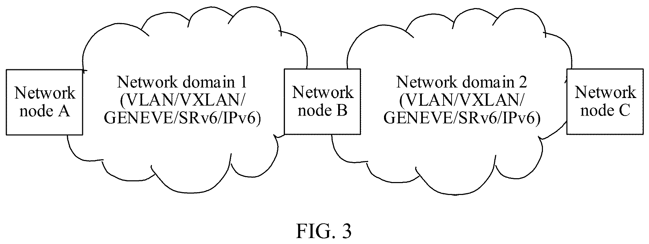

For another example, FIG. 3 is a diagram of another packet forwarding system according to an embodiment of this application. The packet forwarding system includes a network domain 1 and a network domain 2, and the network domain 1 and the network domain 2 are interconnected. The network domain 1 and the network domain 2 are separately a VLAN domain, a VXLAN domain, a GENEVE domain, an SRv6 domain, or an IPv6 domain, and a type of the network domain 1 is different from a type of the network domain 2. For example, the network domain 1 is the VLAN domain, and the network domain 2 is the VXLAN domain, the GENEVE domain, the SRv6 domain, or the IPv6 domain. For another example, the network domain 2 is the VLAN domain, and the network domain 1 is the VXLAN domain, the GENEVE domain, the SRv6 domain, or the IPv6 domain. For still another example, the network domain 1 is the VXLAN domain, and the network domain 2 is the GENEVE domain, the SRv6 domain, or the IPv6 domain. For still another example, the network domain 1 is the GENEVE domain, and the network domain 2 is the VXLAN domain, the SRv6 domain, or the IPv6 domain. As shown in FIG. 1, a network node A and a network node B are both located at edges of the network domain 1, and the network node B and a network node C are both located at edges of the network domain 2. Therefore, the network node B is located at a boundary between the network domain 1 and the network domain 2. In an example, the network node A is located at an ingress of the network domain 1, the network node B is located at an egress of the network domain 1 and is located at an ingress of the network domain 2, and the network node C is located at an egress of the network domain 2. The network node A is an ingress node of the network domain 1, the network node B is an egress node of the network domain 1 and an ingress node of the network domain 2, and the network node C is an egress node of the network domain 2. In another example, the network node A is located at an egress of the network domain 1, the network node B is located at an ingress of the network domain 1 and is located at an egress of the network domain 2, and the network node C is located at an ingress of the network domain 2. The network node A is an egress node of the network domain 1, the network node B is an ingress node of the network domain 1 and an egress node of the network domain 2, and the network node C is an ingress node of the network domain 2. Optionally, the network node A and the network node C are client provider edge (client provider edge, CPE) devices, and the network node B is a point-of-presence (point-of-presence, POP) device.

Refer to FIG. 3. An example in which the network domain 1 is a VLAN domain and the network domain 2 is a VXLAN domain is used for description. For example, the network node A is the ingress node of the network domain 1, the network node B is the egress node of the network domain 1 and the ingress node of the network domain 2, and the network node C is the egress node of the network domain 2. A network slice 1 is deployed in the network domain 1, and the network slice 2 is deployed in the network domain 2. After the network node A receives an original packet P0 from user equipment (the user equipment is connected to the network node A and accesses the network domain 1 via the network node A, and the user equipment is not shown in FIG. 3 for brevity), the network node A obtains a packet P1 based on the original packet P0. The packet P1 includes an ETH header that matches the network domain 1 (the VLAN domain), and the ETH header includes a slice identifier 1 that indicates the network slice 1. The network node A determines the network slice 1 based on the slice identifier 1, and the network node A forwards the packet P1 to the network node B via the network slice 1. After the network node B receives the packet P1, the network node B determines, based on the slice identifier 1 in the packet P1, a slice identifier 2 that indicates a network slice 2, and the network node B obtains a packet P2 based on the packet P1, the slice identifier 2, and the network domain 2 (the VXLAN domain). The packet P2 includes a VXLAN header that matches the network domain 2, and the VXLAN header includes the slice identifier 2. The network node B determines the network slice 2 based on the slice identifier 2, and the network node B forwards the packet P2 to the network node C via the network slice 2. After the network node C receives the packet P2, the network node C performs VXLAN decapsulation on the packet P2 to obtain the original packet P0, and forwards the original packet P0. Therefore, in this application, a slice identifier is carried in the ETH header or the VXLAN header, so that a network node may forward a packet based on the slice identifier carried in the ETH header or the VXLAN header. Therefore, this application may be applied to the VLAN domain and/or the VXLAN domain. In addition, the network node B located at the boundary between the network domain 1 and the network domain 2 may perform switching between the slice identifier 1 and the slice identifier 2, so that switching of the packet between the network slice 1 and the network slice 2 is implemented, to implement cross-domain interworking between the network slice 1 and the network slice 2, avoid complex configuration and forwarding efficiency deterioration caused because the network node performs service reidentification when the packet crosses domains, and improve packet forwarding efficiency.

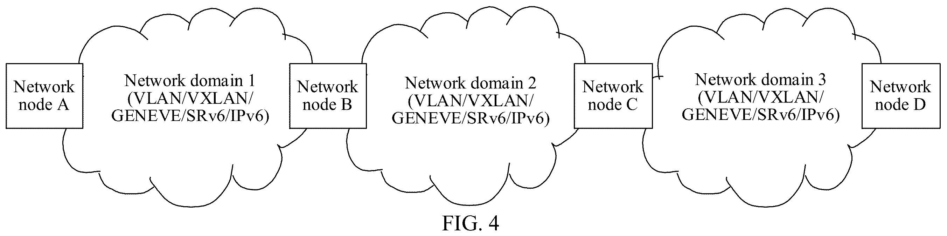

For another example, FIG. 4 is a diagram of still another packet forwarding system according to an embodiment of this application. The packet forwarding system includes a network domain 1, a network domain 2, and a network domain 3. The network domain 2 is interconnected with the network domain 1 and the network domain 3 separately. The network domain 1, the network domain 2, and the network domain 3 are separately a VLAN domain, a VXLAN domain, a GENEVE domain, an SRv6 domain, or an IPv6 domain, and at least two of the network domain 1, the network domain 2, and the network domain 3 have different types. For example, the network domain 1 is the VLAN domain, the network domain 2 is the IPv6 domain, and the network domain 3 is the GENEVE domain. For another example, the network domain 1 is the VXLAN domain, the network domain 2 is the IPv6 domain, and the network domain 3 is the GENEVE domain. For still another example, the network domain 1 is the VLAN domain, the network domain 2 is the VXLAN domain, and the network domain 3 is the GENEVE domain. As shown in FIG. 1, a network node A and a network node B are both located at edges of the network domain 1, the network node B and a network node C are both located at edges of the network domain 2, and the network node C and a network node D are both located at edges of the network domain 3. Therefore, the network node B is located at a boundary between the network domain 1 and the network domain 2, and the network node C is located at a boundary between the network domain 2 and the network domain 3. In an example, the network node A is located at an ingress of the network domain 1, the network node B is located at an egress of the network domain 1 and is located at an ingress of the network domain 2, the network node C is located at an egress of the network domain 2 and is located at an ingress of the network domain 3, and the network node D is located at an egress of the network domain 3. The network node A is an ingress node of the network domain 1, the network node B is an egress node of the network domain 1 and an ingress node of the network domain 2, the network node C is an egress node of the network domain 2 and an ingress node of the network domain 3, and the network node D is an egress node of the network domain 3. In another example, the network node A is located at an egress of the network domain 1, the network node B is located at an ingress of the network domain 1 and is located at an egress of the network domain 2, the network node C is located at an ingress of the network domain 2 and is located at an egress of the network domain 3, and the network node D is located at an ingress of the network domain 3. The network node A is an egress node of the network domain 1, the network node B is an ingress node of the network domain 1 and an egress node of the network domain 2, the network node C is an ingress node of the network domain 2 and an egress node of the network domain 3, and the network node D is an ingress node of the network domain 3. Optionally, the network node A and the network node D are CPE devices, and the network node B and the network node C are POP devices.

Refer to FIG. 4. An example in which the network domain 1 is the VLAN domain, the network domain 2 is the IPv6 domain, and the network domain 3 is the GENEVE domain is used for description. For example, the network node A is the ingress node of the network domain 1, the network node B is the egress node of the network domain 1 and the ingress node of the network domain 2, the network node C is the egress node of the network domain 2 and the ingress node of the network domain 3, and the network node D is the egress node of the network domain 3. A network slice 1 is deployed in the network domain 1, a network slice 2 is deployed in the network domain 2, and a network slice 3 is deployed in the network domain 3. After the network node A receives an original packet P0 from user equipment (the user equipment is connected to the network node A and accesses the network domain 1 via the network node A, and the user equipment is not shown in FIG. 4 for brevity), the network node A obtains a packet P1 based on the original packet P0. The packet P1 includes an ETH header that matches the network domain 1 (the VLAN domain), and the ETH header includes a slice identifier 1 that indicates the network slice 1. The network node A determines the network slice 1 based on the slice identifier 1, and the network node A forwards the packet P1 to the network node B via the network slice 1. After the network node B receives the packet P1, the network node B determines, based on the slice identifier 1 in the packet P1, a slice identifier 2 that indicates a network slice 2, and the network node B obtains a packet P2 based on the packet P1, the slice identifier 2, and the network domain 2 (the IPv6 domain). The packet P2 includes an IPv6 extension header that matches the network domain 2, and the IPv6 extension header includes the slice identifier 2. The network node B determines the network slice 2 based on the slice identifier 2, and the network node B forwards the packet P2 to the network node C via the network slice 2. After the network node C receives the packet P2, the network node C determines, based on the slice identifier 2 in the packet P2, a slice identifier 3 that indicates a network slice 3, and the network node C obtains a packet P3 based on the packet P2, the slice identifier 3, and the network domain 3 (the GENEVE domain). The packet P3 includes a GENEVE header that matches the network domain 3, and the GENEVE header includes the slice identifier 3. The network node C determines the network slice 3 based on the slice identifier 3, and the network node C forwards the packet P3 to the network node D via the network slice 3. After the network node D receives the packet P3, the network node D performs GENEVE decapsulation on the packet P3 to obtain the original packet P0, and forwards the original packet P0. Therefore, in this application, a slice identifier is carried in the ETH header, the IPv6 extension header, or the GENEVE header, so that a network node may forward a packet based on the slice identifier carried in the ETH header, the IPv6 extension header, or the GENEVE header. Therefore, this application may be applied to the VLAN domain and/or the IPv6 domain and/or the GENEVE header. In addition, the network node B located at the boundary between the network domain 1 and the network domain 2 may perform switching between the slice identifier 1 and the slice identifier 2, so that switching of the packet between the network slice 1 and the network slice 2 is implemented, to implement cross-domain interworking between the network slice 1 and the network slice 2. The network node C located at the boundary between the network domain 2 and the network domain 3 may perform switching between the slice identifier 2 and the slice identifier 3, so that switching of the packet between the network slice 2 and the network slice 3 is implemented, to implement cross-domain interworking between the network slice 2 and the network slice 3. In this way, cross-domain interworking between network slices 1 to 3 may be implemented, to avoid complex configuration and forwarding efficiency deterioration caused because the network nodes perform service reidentification when the packets cross domains.

The packet forwarding systems shown in FIG. 2 to FIG. 4 are merely used as examples, and are not intended to limit the technical solutions of this application. In an implementation process, the packet forwarding system may include more or fewer network domains than those shown in FIG. 2 to FIG. 4. The packet forwarding system may further include a control device, to control a network domain in the packet forwarding system. This is not limited in embodiments of this application.

The foregoing describes application scenarios of this application, and the following describes method embodiments of this application.

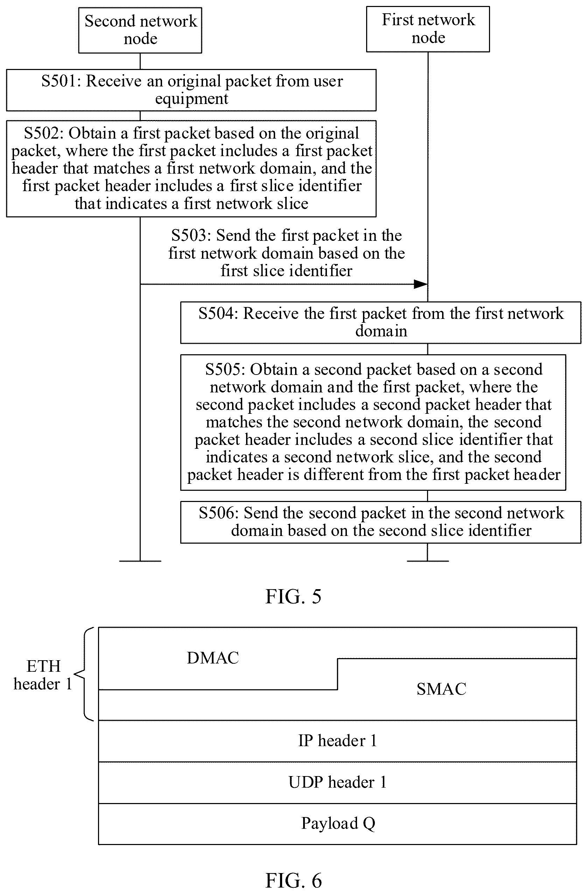

FIG. 5 is a flowchart of a packet forwarding method according to an embodiment of this application. The packet forwarding method is applied to a packet forwarding system including a first network node and a second network node. The first network node is located at a boundary between a first network domain and a second network domain, and the second network node is located at an ingress of the first network domain. In an example, the packet forwarding system is shown in FIG. 3. The first network domain is the network domain 1, the second network domain is the network domain 2, the first network node is the network node B, and the second network node is the network node A. In another example, the packet forwarding system is shown in FIG. 4. The first network domain is the network domain 1, the second network domain is the network domain 2, the first network node is the network node B, and the second network node is the network node A. Alternatively, the first network domain is the network domain 2, the second network domain is the network domain 3, the first network node is the network node C, and the second network node is the network node B. As shown in FIG. 5, the method includes the following steps S501 to S506.

S501: The second network node receives an original packet from user equipment.

The second network node receives the original packet from the user equipment from a previous-hop node of the second network node, where the second network node is an ingress node of the first network domain, and the previous-hop node is located outside the first network domain. For example, the previous-hop node is the user equipment or another node or device connected between the user equipment and the second network node.

Optionally, the second network node is a head node of a first tunnel in the first network domain. For example, the first network domain is a VLAN domain, a VXLAN domain, a GENEVE domain, an SRv6 domain, or an IPv6 domain. Correspondingly, the first tunnel is a VLAN tunnel, a VXLAN tunnel, a GENEVE tunnel, an SRv6 tunnel, or an IPv6 tunnel.

In this embodiment of this application, the original packet from the user equipment is a layer 2 packet or a layer 3 packet, and the original packet includes a payload and a packet header. The layer 2 packet may be an ETH packet, and the layer 3 packet may be an IP packet. In an example, the original packet is a layer 2 packet, the original packet includes a payload, a user datagram protocol (user datagram protocol, UDP) header, and an ETH header. The UDP header is used to carry UDP information of the original packet, and the ETH header is used to carry layer 2 information of the original packet, where the layer 2 information includes a source medium access control (source medium access control, SMAC) address, a destination medium access control (destination medium access control, DMAC) address, and the like. In another example, the original packet is a layer 3 packet, the original packet includes a payload, a UDP header, an IP header, and an ETH header. The UDP header is used to carry UDP information of the original packet, and the IP header is used to carry layer 3 information of the original packet, where the layer 3 information includes an IP 5-tuple and the like, and the ETH header is used to carry layer 2 information of the original packet. An example in which the original packet is a layer 3 packet is used for description. The original packet is shown in FIG. 6. The original packet includes a payload Q and a UDP header 1, an IP header 1, and an ETH header 1 that are sequentially encapsulated outside the payload Q. The ETH header 1 includes an SMAC field and a DMAC field. The SMAC field is used to carry an SMAC address of the original packet, and the DMAC field is used to carry a DMAC address of the original packet. The original packet shown in FIG. 6 is merely used as an example, and the original packet may further include content not shown in FIG. 6. This is not limited in this application.

S502: The second network node obtains a first packet based on the original packet, where the first packet includes a first packet header that matches the first network domain, and the first packet header includes a first slice identifier that indicates a first network slice.

The second network node may add, to the original packet, the first slice identifier that indicates the first network slice, to obtain the first packet. The first network slice is deployed in the first network domain. Optionally, the first network slice is a network slice in the first tunnel. In an embodiment, the second network node determines, based on traffic characteristic information of the original packet, the first network slice used to forward the original packet, and the second network node adds, to the original packet, the first slice identifier that indicates the first network slice, to obtain the first packet. The traffic characteristic information includes at least one of IP information and MAC information. For example, the IP information includes an IP 5-tuple, an IP 3-tuple, and the like, and the MAC information includes SMAC, DMAC, and the like.

In this embodiment of this application, the first packet includes the first packet header that matches the first network domain, and the first slice identifier is included in the first packet header. The first network domain is a VLAN domain, a VXLAN domain, a GENEVE domain, an SRv6 domain, or an IPv6 domain. Based on different first network domains, first packets are different, and first packet headers are different. The following describes an implementation process of S502 in five embodiments by using examples in which the first network domain is the VLAN domain, the VXLAN domain, the GENEVE domain, the SRv6 domain, and the IPv6 domain.

In a first embodiment, the first network domain is a VLAN domain, the first packet is a VLAN packet (the VLAN packet is a layer 2 packet), and the first packet header is an ETH header (the ETH header is a layer 2 packet header). The ETH header includes a slice indication field, the slice indication field is used to carry a slice identifier, and the first slice identifier is carried in the slice indication field. Optionally, the first packet header further includes a VLAN tag, and the slice indication field is located between the VLAN tag and a payload of the first packet. Optionally, the original packet includes the ETH header. The second network node adds the VLAN tag and the slice indication field to the ETH header of the original packet, and adds the first slice identifier to the slice indication field to obtain the first packet.

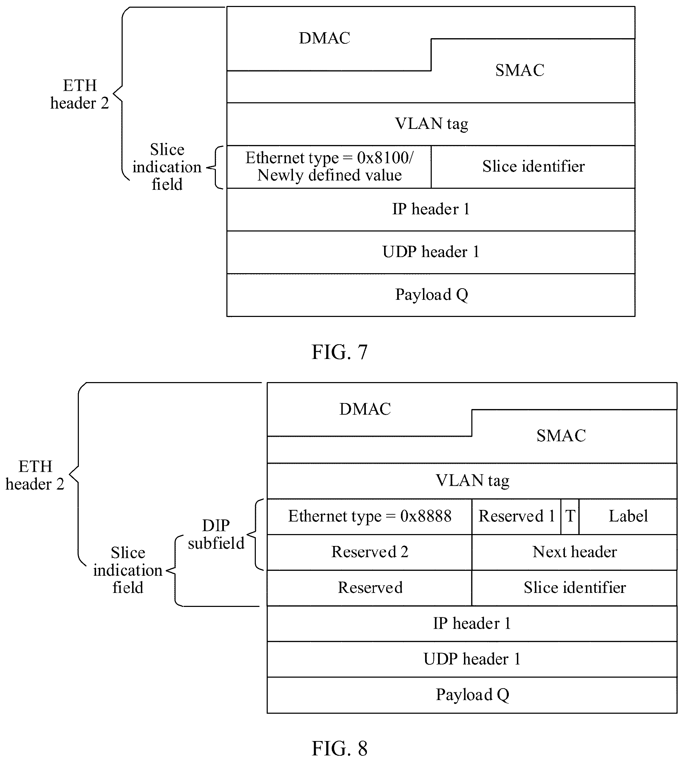

In an example, the first packet is shown in FIG. 7, and the first packet includes a payload Q, a UDP header 1, an IP header 1, and an ETH header 2. The ETH header 2 is a first packet header that matches the first network domain (the VLAN domain), and the ETH header 2 includes a DMAC field, an SMAC field, a VLAN tag field, and a slice indication field. The VLAN tag field is used to carry a VLAN tag, and the slice indication field includes an Ethernet type (ethernet type) subfield and a slice identifier subfield. The Ethernet type subfield indicates the slice indication field, a value of the Ethernet type subfield may be 0x8100 or a newly defined value, and the slice identifier subfield is used to carry a slice identifier. Refer to FIG. 6 and FIG. 7. The second network node may add the VLAN tag field and the slice indication field to the ETH header 1 of the original packet shown in FIG. 6, and add the VLAN tag to the VLAN tag field. In addition, the second network node sets the value of the Ethernet type subfield to 0x8100 or the newly defined value, and the second network node adds the first slice identifier to the slice identifier subfield, to obtain the first packet shown in FIG. 7.

In another example, the first packet is shown in FIG. 8, and the first packet includes a payload Q, a UDP header 1, an IP header 1, and an ETH header 2. The ETH header 2 is a first packet header that matches the first network domain (the VLAN domain), and the ETH header 2 includes a DMAC field, an SMAC field, a VLAN tag field, and a slice indication field. The VLAN tag field is used to carry a VLAN tag, and the slice indication field includes a determined IP (determined IP, DIP) subfield, a reserved subfield, and a slice identifier subfield. The DIP subfield is used to carry DIP information, and the slice identifier subfield is used to carry a slice identifier. As shown in FIG. 8, the DIP subfield includes an Ethernet type space, a tiger (tiger, T) space, a label (label) space, a next header (next header) space, and two reserved spaces. A value of the Ethernet type space is 0x8888 to indicate the DIP subfield, the T space indicates whether to enable the DIP subfield, and the next header space indicates the slice identifier subfield. Refer to FIG. 6 and FIG. 8. The second network node may add the VLAN tag field and the slice indication field to the ETH header 1 of the original packet shown in FIG. 6, and add the VLAN tag to the VLAN tag field. In addition, the second network node sets the value of the Ethernet type space to 0x8888 or sets the next header space to indicate the slice identifier subfield, and the second network node adds the first slice identifier to the slice identifier subfield, to obtain the first packet shown in FIG. 8.

In the first packets shown in FIG. 7 and FIG. 8, the VLAN tag field may include an Ethernet type subfield, a priority (priority, PRI) subfield, a canonical format indicator (canonical format indicator, CFI) subfield, and a VLAN identifier (VLAN identifier, VID) subfield. For brevity, these subfields are not shown in FIG. 7 and FIG. 8. For meanings of the subfields in the VLAN tag field, refer to a VLAN protocol. Optionally, the ETH header 2 includes an outer VLAN tag field and an inner VLAN tag field. As shown in FIG. 7 and FIG. 8, the VLAN tag fields are outer VLAN tag fields, and the slice indication fields may be inner VLAN tag fields. For the first packet shown in FIG. 8, the DIP subfield is also referred to as a DIP header (header). For the first packet shown in FIG. 7, a format of the slice indication field may also be set to be the same as a format of the VLAN tag field. In the slice indication field, the PRI subfield and the CFI subfield may be reserved, and the VID subfield is used as the slice identifier field to carry the first slice identifier. Further, for the first packet shown in FIG. 7, in an implementation in which the value of the Ethernet type subfield is 0x8100, to avoid a conflict between the inner VLAN tag field (namely, the slice indication field) that carries the slice identifier and a double-layer VLAN feature, a control entry may be configured in a device to distinguish whether the inner VLAN tag field carries the slice identifier or the VLAN tag. For example, a slice control entry and a VLAN control entry are configured in the device. If content carried in the inner VLAN tag field hits the slice control entry, it is determined that the content carried in the inner VLAN tag field is the slice identifier. If the content carried in the inner VLAN tag field hits the VLAN control entry, it is determined that the content carried in the inner VLAN tag field is the VLAN tag. A network processor (network processor, NP) chip and most application-specific integrated circuit (application-specific integrated circuit, ASIC) chips all support this implementation. For the first packet shown in FIG. 7, scalability of an implementation in which the value of the Ethernet type subfield is the newly defined value is high. The NP chip may support this implementation, or a related capability is embedded in the ASIC chip in advance to support this implementation, or a field-programmable gate array (field-programmable gate array, FPGA) chip is externally mounted to support this implementation. For the first packet shown in FIG. 8, the NP chip may support this implementation, or a related capability is embedded in the ASIC chip in advance to support this implementation, or an FPGA chip is externally mounted to support this implementation.

In a second embodiment, the first network domain is a VXLAN domain, the first packet is a VXLAN packet, and the first packet header is a VXLAN header. The VXLAN header includes a reserved field or an extended field, the reserved field or the extended field is used to carry a slice identifier, and the first slice identifier is carried in the reserved field or the extended field. In an example, the VXLAN header includes the reserved field, and the first slice identifier is carried in the reserved field. In another example, the VXLAN header includes the extended field, and the first slice identifier is carried in the extended field. Optionally, the second network node encapsulates the VXLAN header into the original packet, and the second network node adds the first slice identifier to the VXLAN header to obtain the first packet.

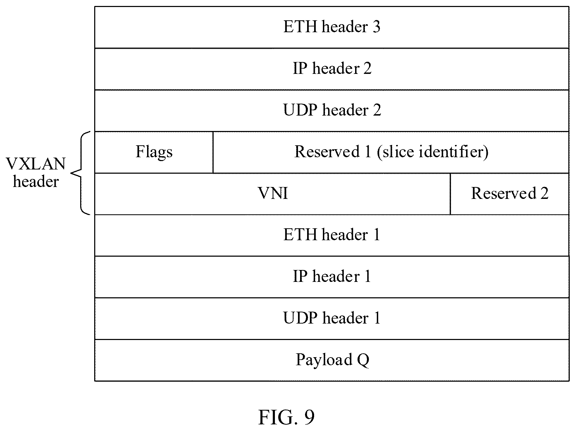

In an example, the first packet is shown in FIG. 9. The first packet includes a payload Q, a UDP header 1, an IP header 1, an ETH header 1, a VXLAN header, a UDP header 2, an IP header 2, and an ETH header 3. The VXLAN header is the first packet header that matches the first network domain (the VXLAN domain), and the VXLAN header includes a flags field, a VXLAN network identifier (VXLAN network identifier, VNI) field, and two reserved fields. The VNI field is used to carry a VXLAN ID, and the flags field indicates validity of a VXLAN ID. For example, the flags field includes eight flags bits, and a 3^{rd} flags bit arranged from a least significant bit to a most significant bit in the eight flags bits indicates the validity of the VXLAN ID, and all other flags bits in the eight flags bits are reserved flags bits. Usually, the 3^{rd} flags bit is set to 1, to indicate that the VXLAN ID carried in the VNI field is valid. A reserved field 1 is used to carry the slice identifier. Refer to FIG. 6 and FIG. 9. The second network node may sequentially encapsulate the VXLAN header, the UDP header 2, the IP header 2, and the ETH header 3 outside the original packet shown in FIG. 6, and the second network node adds the first slice identifier to the reserved field 1 in the VXLAN header, to obtain the first packet shown in FIG. 9. In FIG. 9, an example in which the slice identifier is carried in the reserved field 1 is used for description. Alternatively, the slice identifier may be carried in a reserved field 2. Because a length of the reserved field 1 is greater than a length of the reserved field 2 (the length of the reserved field 1 is 24 bits, and the length of the reserved field 2 is 8 bits), compared with the reserved field 2, the reserved field 1 can support a longer slice identifier, and can support cross-domain unified planning of the slice identifier.

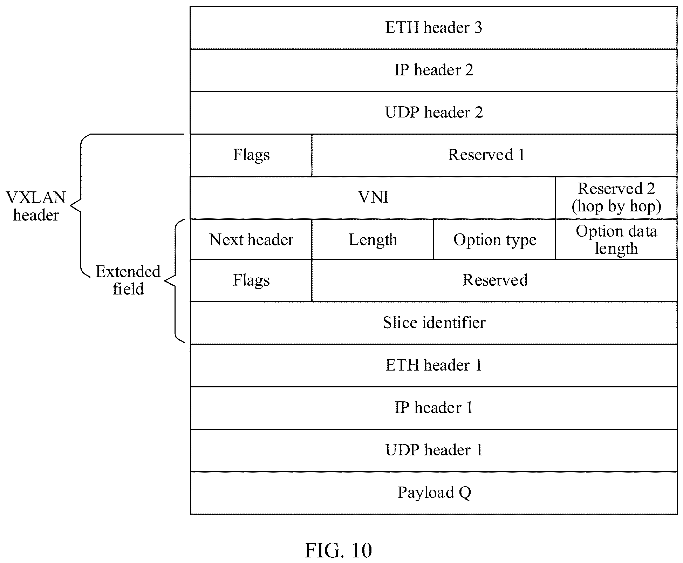

In another example, the first packet is shown in FIG. 10. The first packet includes a payload Q, a UDP header 1, an IP header 1, an ETH header 1, a VXLAN header, a UDP header 2, an IP header 2, and an ETH header 3. The VXLAN header is the first packet header that matches the first network domain (the VXLAN domain), and the VXLAN header includes a flags field, a VNI field, two reserved fields, and an extended field. The VNI field is used to carry a VXLAN ID, and the flags field indicates validity of the VXLAN ID. The extended field is a packet header extended in the VXLAN header. The extended field is also referred to as a VXLAN extension header. The extended field needs to be processed hop by hop. A reserved field 2 indicates that the extended field needs to be processed hop by hop. The extended field includes a next header subfield, a length (length) subfield, an option type (option type) subfield, an option data length (option data length) subfield, a flags (flags) subfield, a reserved subfield, and a slice identifier subfield. The next header subfield indicates the extended field. The length subfield indicates a total length of data subfields in the extended field (namely, a total length of subfields other than the next header subfield and the length subfield in the extended field). The option type subfield, the option data length subfield, the flags subfield, the reserved subfield, and the slice identifier subfield form an option subfield. The option type subfield indicates a type of the option subfield, the option data length subfield indicates a length of data subfields in the option subfield (namely, a total length of subfields other than the option type subfield and the option data length subfield in the option subfield), and the slice identifier subfield is used to carry a slice identifier. Refer to FIG. 6 and FIG. 10. The second network node may sequentially encapsulate the VXLAN header, the UDP header 2, the IP header 2, and the ETH header 3 outside the original packet shown in FIG. 6, and the second network node sets the extended field in the VXLAN header and adds the first slice identifier to the extended field, to obtain the first packet shown in FIG. 10.

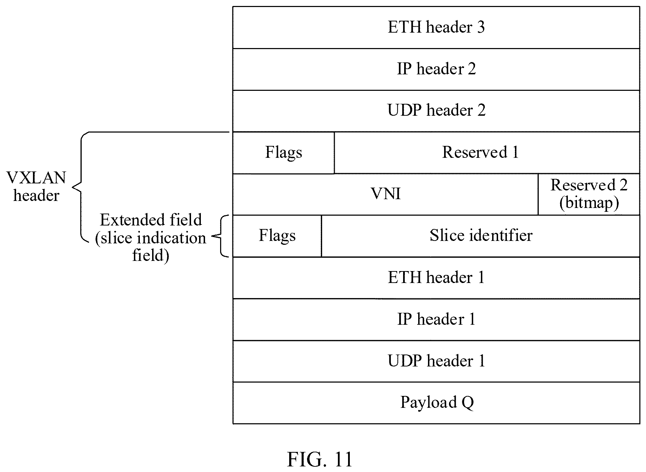

In still another example, the first packet is shown in FIG. 11. The first packet includes a payload Q, a UDP header 1, an IP header 1, an ETH header 1, a VXLAN header, a UDP header 2, an IP header 2, and an ETH header 3. The VXLAN header is the first packet header that matches the first network domain (the VXLAN domain), and the VXLAN header includes a flags field, a VNI field, two reserved fields, and an extended field. The VNI field is used to carry a VXLAN ID, and the flags field indicates validity of the VXLAN ID. A reserved field 2 is a bitmap (bitmap) field, and the bitmap field indicates service information included in the extended field. For example, the bitmap field includes a plurality of bits, each bit corresponds to one service, each bit indicates whether the extended field includes service information of the corresponding service, and a value of each bit may be 0 or 1. "1" indicates that the extended field includes the service information of the service corresponding to the bit, and "0" indicates that the extended field does not include the service information of the service corresponding to the bit. For example, a first bit (for example, a most significant bit) in the bitmap field corresponds to a slice service, and the first bit indicates that the extended field carries a slice identifier. In an example, the first bit indicates that the extended field includes a slice indication field, and the slice indication field includes a flags subfield and a slice identifier subfield. The flags subfield indicates the slice identifier subfield, and the slice identifier subfield carries the slice identifier. Refer to FIG. 6 and FIG. 11. The second network node may sequentially encapsulate the VXLAN header, the UDP header 2, the IP header 2, and the ETH header 3 outside the original packet shown in FIG. 6, the second network node sets the extended field in the VXLAN header, the second network node sets a value of the first bit in the bitmap field to 1 and sets the extended field to include the slice indication field, and the second network node adds the first slice identifier to the slice indication field, to obtain the first packet shown in FIG. 11. In this application, the bitmap field is set, so that service information of a plurality of services can be encapsulated in an integrated manner in the extended field, to improve packet encapsulation efficiency.

In a third embodiment, the first network domain is a GENEVE domain, the first packet is a GENEVE packet, and the first packet header is a GENEVE header. The GENEVE header includes an extended field, the extended field is used to carry a slice identifier, and the first slice identifier is carried in the extended field. Optionally, the second network node encapsulates the GENEVE header into the original packet, and the second network node adds the first slice identifier to the GENEVE header to obtain the first packet.

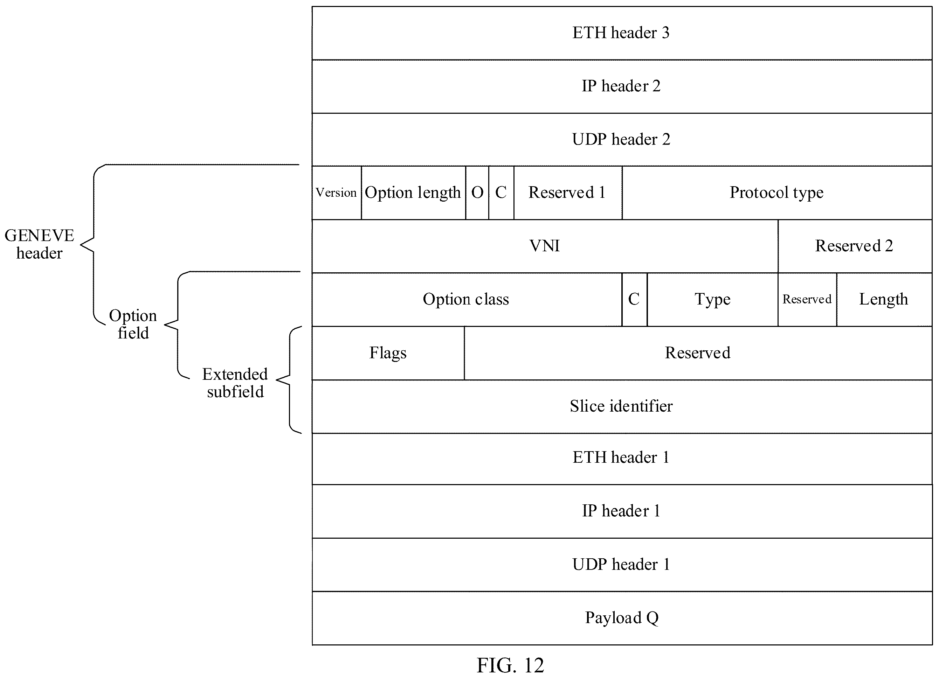

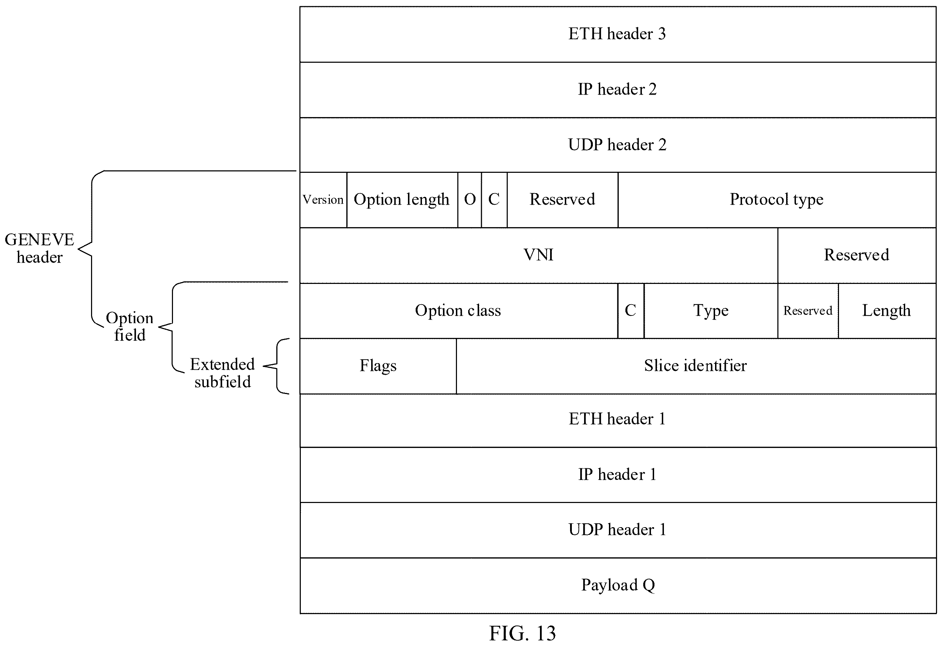

In an example, the first packet is shown in FIG. 12 or FIG. 13. The first packet includes a payload Q, a UDP header 1, an IP header 1, an ETH header 1, a GENEVE header, a UDP header 2, an IP header 2, and an ETH header 3. The GENEVE header is the first packet header that matches a first network domain (the GENEVE domain), and the GENEVE header includes a version (version) field, an option length field, an O field, a C field, a protocol type field, a VNI field, two reserved fields, and an option field. The version field is used to carry version information. The option length field indicates a length of the option field, and the length of the option field is variable. The O field indicates that a packet including the O field is an operation, administration, and maintenance (operation, administration, and maintenance, OAM) packet. The C field indicates that there are one or more critical (critical) options in the option field. The protocol type field is used to carry a protocol type. The VNI field is used to carry a VXLAN ID. The option field includes an option class (option class) subfield, a C subfield, a type subfield, a reserved subfield, a length subfield, and an extension subfield. The extension subfield includes a flags space and a slice identifier space, the flags space indicates the slice identifier space, and the slice identifier space is used to carry a slice identifier. It can be learned by comparing FIG. 12 and FIG. 13 that, in the first packet shown in FIG. 12, the extension subfield further includes a reserved space, and a length of the slice identifier space is large. For example, the length of the slice identifier space in the first packet shown in FIG. 12 is 32 bits, and a length of the slice identifier space in the first packet shown in FIG. 13 is 24 bits. Refer to FIG. 6, FIG. 12, and FIG. 13. The second network node may sequentially encapsulate the GENEVE header, the UDP header 2, the IP header 2, and the ETH header 3 outside the original packet shown in FIG. 6, and the second network node adds the first slice identifier to the extension subfield in the GENEVE header, to obtain the first packet shown in FIG. 12 or FIG. 13.

In a fourth embodiment, the first network domain is an SRv6 domain, the first packet is an SRv6 packet, and the first packet header is an HBH or a DOH. The HBH or the DOH is used to carry a slice identifier, and the first slice identifier is carried in the HBH or the DOH. For example, the HBH or the DOH includes an option field, and the first slice identifier is carried in the option field.

Optionally, the second network node encapsulates the HBH or the DOH into the original packet, the second network node sets, in the HBH or the DOH, the option field used to carry the slice identifier, and the second network node adds the first slice identifier to the option field to obtain the first packet.

In a fifth embodiment, the first network domain is an IPv6 domain, the first packet is an IPv6 packet, and the first packet header is an IPv6 extension header. The IPv6 extension header is used to carry a slice identifier, and the first slice identifier is carried in the IPv6 extension header. For example, the IPv6 extension header includes an option field, and the first slice identifier is carried in the option field.

Optionally, the second network node encapsulates the IPv6 extension header into the original packet, the second network node sets, in the IPv6 extension header, the option field used to carry the slice identifier, and the second network node adds the first slice identifier to the option field to obtain the first packet.

The first packets shown in FIG. 9 to FIG. 11 are packets obtained by the second network node by performing VXLAN encapsulation on the original packet shown in FIG. 6. When performing VXLAN encapsulation on the original packet, the second network node sequentially encapsulates the VXLAN header, the UDP header 2, the IP header 2, and the ETH header 3 outside the original packet. The first packets shown in FIG. 12 and FIG. 13 are packets obtained by the second network node by performing GENEVE encapsulation on the original packet shown in FIG. 6. When performing GENEVE encapsulation on the original packet, the second network node sequentially encapsulates the GENEVE header, the UDP header 2, the IP header 2, and the ETH header 3 outside the original packet. As shown in FIG. 9 to FIG. 13, in some embodiments, the UDP header 1 is referred to as an inner UDP header, the IP header 1 is referred to as an inner IP header, the ETH header 1 is referred to as an inner ETH header, the UDP header 2 is referred to as an outer UDP header, the IP header 2 is referred to as an outer IP header, and the ETH header 3 is referred to as an outer ETH header. For a process in which the second network node performs VXLAN encapsulation on the original packet, a process in which the second network node performs GENEVE encapsulation on the original packet, and specific content of the UDP header 2, the IP header 2, and the ETH header 3, refer to a VXLAN protocol and related standard documents of the VXLAN encapsulation. Details are not described herein.

S503: The second network node sends the first packet in the first network domain based on the first slice identifier.

Optionally, the second network node sends, based on the first slice identifier, the first packet to the first network node located at the boundary between the first network domain and the second network domain. For example, the second network node determines the first network slice based on the first slice identifier, and the second network node sends and forwards the first packet to the first network node via the first network slice. In an embodiment, the second network node includes a packet queue corresponding to the first network slice, the second network node buffers the first packet into the packet queue, and the second network node sends the first packet to the first network node based on a sequence of the first packet in the packet queue.

S504: The first network node receives the first packet from the first network domain.

The first network node receives the first packet from a previous-hop node of the first network node, where the first network node is an egress node of the first network domain, and the previous-hop node is located in the first network domain. Optionally, the first network node is a tail node of the first tunnel.

In this embodiment of this application, the first network node is located at the boundary between the first network domain and the second network domain, and the first network node is not only the egress node of the first network domain, but also an ingress node of the second network domain. In an embodiment, the first network node is a head node of a second tunnel in the second network domain. The second network domain is a VLAN domain, a VXLAN domain, a GENEVE domain, an SRv6 domain, or an IPv6 domain. Correspondingly, the second tunnel is a VLAN tunnel, a VXLAN tunnel, a GENEVE tunnel, an SRv6 tunnel, or an IPv6 tunnel. In an example, the second network domain is the VLAN domain, and the second tunnel is the VLAN tunnel. In another example, the second network domain is the VXLAN domain, and the second tunnel is the VXLAN tunnel. In still another example, the second network domain is the GENEVE domain, and the second tunnel is the GENEVE tunnel. In yet another example, the second network domain is the SRv6 domain, and the second tunnel is the SRv6 tunnel. In yet another example, the second network domain is the IPv6 domain, and the second tunnel is the IPv6 tunnel.

S505: The first network node obtains a second packet based on the second network domain and the first packet, where the second packet includes a second packet header that matches the second network domain, the second packet header includes a second slice identifier that indicates a second network slice, and the second packet header is different from the first packet header.

Optionally, the first network node determines the second slice identifier based on the first slice identifier in the first packet header included in the first packet, and the first network node obtains the second packet based on the first packet, the second slice identifier, and the second network domain. The second network slice is deployed in the second network domain. Optionally, the second network slice is a network slice in the second tunnel.

In an embodiment, the first network node includes a first mapping relationship, the first mapping relationship includes a mapping relationship between the first slice identifier and the second slice identifier, and the first network node determines the second slice identifier based on the first slice identifier and the first mapping relationship. Optionally, the first network node searches the first mapping relationship based on the first slice identifier, and the first network node determines a slice identifier that is in the first mapping relationship and that corresponds to the first slice identifier as the second slice identifier that indicates the second network slice.

In this embodiment of this application, the first mapping relationship is a mapping relationship generated based on configuration information delivered by a control device, or the first mapping relationship is a statically configured mapping relationship. In an embodiment, the first mapping relationship is the mapping relationship generated based on the configuration information delivered by the control device. The first network node receives the configuration information from the control device, where the configuration information includes the first slice identifier and the second slice identifier. The first network node generates the first mapping relationship based on the first slice identifier and the second slice identifier that are included in the configuration information. In another embodiment, a user statically configures the first mapping relationship in the first network node via a command line, and the first network node obtains the first mapping relationship statically configured by the user via the command line.

In this embodiment of this application, the second network domain is a VLAN domain, a VXLAN domain, a GENEVE domain, an SRv6 domain, or an IPv6 domain; correspondingly, the second packet is a VLAN packet, a VXLAN packet, a GENEVE packet, an SRv6 packet, or an IPv6 packet; and correspondingly, the second packet header that matches the second network domain is an ETH header, a VXLAN header, a GENEVE header, an HBH (or a DOH), or an IPv6 extension header. A type of the second network domain is different from a type of the first network domain, and correspondingly, the second packet header is different from the first packet header. In an example, the first network domain is the VLAN domain, and the second network domain is the VXLAN domain, the GENEVE domain, the SRv6 domain, or the IPv6 domain. In another example, the first network domain is the VXLAN domain, the GENEVE domain, the SRv6 domain, or the IPv6 domain, and the second network domain is the VLAN domain. In still an example, the first network domain is the GENEVE domain, and the second network domain is the VLAN domain, the VXLAN domain, the SRv6 domain, or the IPv6 domain.

The first network node is located at the boundary between the first network domain and the second network domain, the first network node is the egress node of the first network domain, and the first network node is the ingress node of the second network domain. That the first network node obtains the second packet based on the first packet, the second slice identifier, and the second network domain may include: The first network node decapsulates the first packet based on the type of the first network domain to obtain the original packet, and the first network node encapsulates the original packet based on the type of the second network domain to obtain the second packet. The second packet header of the second packet includes the second slice identifier that indicates the second network slice.

In an embodiment, the first network domain is the VLAN domain, the second network domain is the VXLAN domain, and the first packet is shown in FIG. 7 or FIG. 8. The first network node performs VLAN decapsulation (for example, removes the VLAN tag field and the slice indication field from the ETH header 2) on the first packet to obtain the original packet shown in FIG. 5. The first network node performs VXLAN encapsulation on the original packet to obtain the second packet. For a structure of the second packet, refer to the first packet shown in any one of FIG. 9 to FIG. 11.

In another embodiment, the first network domain is the VLAN domain, the second network domain is the GENEVE domain, and the first packet is shown in FIG. 7 or FIG. 8. The first network node performs VLAN decapsulation on the first packet to obtain the original packet shown in FIG. 5. The first network node performs GENEVE encapsulation on the original packet to obtain the second packet. For a structure of the second packet, refer to the first packet shown in FIG. 12 or FIG. 13.

In still another embodiment, the first network domain is the VLAN domain, the second network domain is the SRv6 domain, and the first packet is shown in FIG. 7 or FIG. 8. The first network node performs VLAN decapsulation on the first packet to obtain the original packet shown in FIG. 5. The first network node performs SRv6 encapsulation on the original packet to obtain the second packet. The second packet includes an HBH or a DOH, and the HBH or the DOH includes the second slice identifier.

In yet another embodiment, the first network domain is the VLAN domain, the second network domain is the IPv6 domain, and the first packet is shown in FIG. 7 or FIG. 8. The first network node performs VLAN decapsulation on the first packet to obtain the original packet shown in FIG. 5. The first network node performs IPv6 encapsulation on the original packet to obtain the second packet. The second packet includes an IPv6 extension header, and the IPv6 extension header includes the second slice identifier.

In yet another embodiment, the first network domain is the VXLAN domain, the second network domain is the VLAN domain, and the first packet is shown in any one of FIG. 9 to FIG. 11. The first network node performs VXLAN decapsulation (for example, removes the VXLAN header, the UDP header 2, the IP header 2, and the ETH header 3) on the first packet to obtain the original packet shown in FIG. 5. The first network node performs VLAN encapsulation on the original packet to obtain the second packet. For a structure of the second packet, refer to the first packet shown in FIG. 7 or FIG. 8.

In yet another embodiment, the first network domain is the VXLAN domain, the second network domain is the GENEVE domain, and the first packet is shown in any one of FIG. 9 to FIG. 11. The first network node performs VXLAN decapsulation on the first packet to obtain the original packet shown in FIG. 5. The first network node performs GENEVE encapsulation on the original packet to obtain the second packet. For a structure of the second packet, refer to the first packet shown in FIG. 12 or FIG. 13.

In yet another embodiment, the first network domain is the VXLAN domain, the second network domain is the SRv6 domain, and the first packet is shown in any one of FIG. 9 to FIG. 11. The first network node performs VXLAN decapsulation on the first packet to obtain the original packet shown in FIG. 5. The first network node performs SRv6 encapsulation on the original packet to obtain the second packet. The second packet includes an HBH or a DOH, and the HBH or the DOH includes the second slice identifier.

In yet another embodiment, the first network domain is the VXLAN domain, the second network domain is the IPv6 domain, and the first packet is shown in any one of FIG. 9 to FIG. 11. The first network node performs VXLAN decapsulation on the first packet to obtain the original packet shown in FIG. 5. The first network node performs IPv6 encapsulation on the original packet to obtain the second packet. The second packet includes an IPv6 extension header, and the IPv6 extension header includes the second slice identifier.

In yet another embodiment, the first network domain is the GENEVE domain, the second network domain is the VLAN domain, and the first packet is shown in FIG. 12 or FIG. 13. The first network node performs GENEVE decapsulation (for example, removes the GENEVE header, the UDP header 2, the IP header 2, and the ETH header 3) on the first packet to obtain the original packet shown in FIG. 5. The first network node performs VLAN encapsulation on the original packet to obtain the second packet. For a structure of the second packet, refer to the first packet shown in FIG. 7 or FIG. 8.

In yet another embodiment, the first network domain is the GENEVE domain, the second network domain is the VXLAN domain, and the first packet is shown in FIG. 12 or FIG. 13. The first network node performs GENEVE decapsulation on the first packet to obtain the original packet shown in FIG. 5. The first network node performs VXLAN encapsulation on the original packet to obtain the second packet. For a structure of the second packet, refer to the first packet shown in any one of FIG. 9 to FIG. 11.

In yet another embodiment, the first network domain is the GENEVE domain, the second network domain is the SRv6 domain, and the first packet is shown in FIG. 12 or FIG. 13. The first network node performs GENEVE decapsulation on the first packet to obtain the original packet shown in FIG. 5. The first network node performs SRv6 encapsulation on the original packet to obtain the second packet. The second packet includes an HBH or a DOH, and the HBH or the DOH includes the second slice identifier.

In yet another embodiment, the first network domain is the GENEVE domain, the second network domain is the IPv6 domain, and the first packet is shown in FIG. 12 or FIG. 13. The first network node performs GENEVE decapsulation on the first packet to obtain the original packet shown in FIG. 5. The first network node performs IPv6 encapsulation on the original packet to obtain the second packet. The second packet includes an IPv6 extension header, and the IPv6 extension header includes the second slice identifier.

In yet another embodiment, the first network domain is the SRv6 domain, and the second network domain is the VLAN domain. The first network node performs SRv6 decapsulation on the first packet to obtain the original packet shown in FIG. 5. The first network node performs VLAN encapsulation on the original packet to obtain the second packet. For a structure of the second packet, refer to the first packet shown in FIG. 7 or FIG. 8.

In yet another embodiment, the first network domain is the SRv6 domain, and the second network domain is the VXLAN domain. The first network node performs SRv6 decapsulation on the first packet to obtain the original packet shown in FIG. 5. The first network node performs VXLAN encapsulation on the original packet to obtain the second packet. For a structure of the second packet, refer to the first packet shown in any one of FIG. 9 to FIG. 11.

In yet another embodiment, the first network domain is the SRv6 domain, and the second network domain is the GENEVE domain. The first network node performs SRv6 decapsulation on the first packet to obtain the original packet shown in FIG. 5. The first network node performs GENEVE encapsulation on the original packet to obtain the second packet. For a structure of the second packet, refer to the first packet shown in FIG. 12 or FIG. 13.

In yet another embodiment, the first network domain is the SRv6 domain, and the second network domain is the IPv6 domain. The first network node performs SRv6 decapsulation on the first packet to obtain the original packet shown in FIG. 5. The first network node performs IPv6 encapsulation on the original packet to obtain the second packet. The second packet includes an IPv6 extension header, and the IPv6 extension header includes the second slice identifier.

In yet another embodiment, the first network domain is the IPv6 domain, and the second network domain is the VLAN domain. The first network node performs IPv6 decapsulation on the first packet to obtain the original packet shown in FIG. 5. The first network node performs VLAN encapsulation on the original packet to obtain the second packet. For a structure of the second packet, refer to the first packet shown in FIG. 7 or FIG. 8.

In yet another embodiment, the first network domain is the IPv6 domain, and the second network domain is the VXLAN domain. The first network node performs IPv6 decapsulation on the first packet to obtain the original packet shown in FIG. 5. The first network node performs VXLAN encapsulation on the original packet to obtain the second packet. For a structure of the second packet, refer to the first packet shown in any one of FIG. 9 to FIG. 11.

In yet another embodiment, the first network domain is the IPv6 domain, and the second network domain is the GENEVE domain. The first network node performs IPv6 decapsulation on the first packet to obtain the original packet shown in FIG. 5. The first network node performs GENEVE encapsulation on the original packet to obtain the second packet. For a structure of the second packet, refer to the first packet shown in FIG. 12 or FIG. 13.

In yet another embodiment, the first network domain is the IPv6 domain, and the second network domain is the SRv6 domain. The first network node performs IPv6 decapsulation on the first packet to obtain the original packet shown in FIG. 5. The first network node performs SRv6 encapsulation on the original packet to obtain the second packet. The second packet includes an HBH or a DOH, and the HBH or the DOH includes the second slice identifier.

In an optional embodiment, before S505, a slice switching function is enabled in the first network node in advance, so that the first network node may perform S505 when receiving the first packet. The first network node may enable the slice switching function based on user configuration information, or may enable the slice switching function based on control information delivered by the control device. This is not limited in this embodiment of this application.

S506: The first network node sends the second packet in the second network domain based on the second slice identifier.

The first network node determines the second network slice based on the second slice identifier, and then sends the second packet via the second network slice. In an embodiment, the first network node includes a packet queue corresponding to the second network slice, the first network node buffers the second packet into the packet queue, and the first network node sends the second packet based on a sequence of the second packet in the packet queue.

In conclusion, according to the technical solution provided in this embodiment of this application, the first packet obtained, based on the original packet, by the second network node located at the ingress of the first network domain includes the first packet header that matches the first network domain, and the first packet header includes the first slice identifier that indicates the first network slice. The second network node sends the first packet in the second network domain based on the first slice identifier, and after receiving the first packet, the first network node located at the boundary between the first network domain and the second network domain obtains the second packet based on the second network domain and the first packet and sends the second packet in the second network domain based on the second slice identifier that is in the second packet header included in the second packet and that indicates the second network slice, to implement switching between the first network slice in the first network domain and the second network slice in the second network domain, to implement cross-domain interworking between the first network slice and the second network slice, avoid complex configuration and forwarding efficiency deterioration caused because the network node performs service reidentification when the packet crosses domains, and improve packet forwarding efficiency. In addition, in this application, a slice identifier may be carried in a packet header such as an ETH header, a VXLAN header, a GENEVE header, an IPv6 extension header, an HBH, or a DOH, and a network node may forward a packet based on the slice identifier carried in the packet header, so that the technical solutions of this application may be applied to a network scenario such as a VLAN network, a VXLAN network, a GENEVE network, an IPv6 network, or an SRv6 network, and in the network scenario such as the VLAN network, the VXLAN network, the GENEVE network, the IPv6 network, or the SRv6 network, a slicing technology is used to implement hard isolation between forwarding resources (such as a bandwidth and a buffer). In addition, in this application, the network node may process, hop by hop, the packet that carries the slice identifier, to implement hop-by-hop hard isolation between network resources. In this application, different services such as a production service and an office service carried on a VLAN network, a VXLAN network, a GENEVE network, an IPv6 network, an SRv6 network, and the like can be transmitted through different network slices, so that network resources of different services are securely isolated from each other, and SLA quality of a high-priority service is ensured. A slice identifier switching solution provided in this application is applicable to a scenario of interconnection between different campus networks and a scenario of interconnection between a campus network and a cloud network.

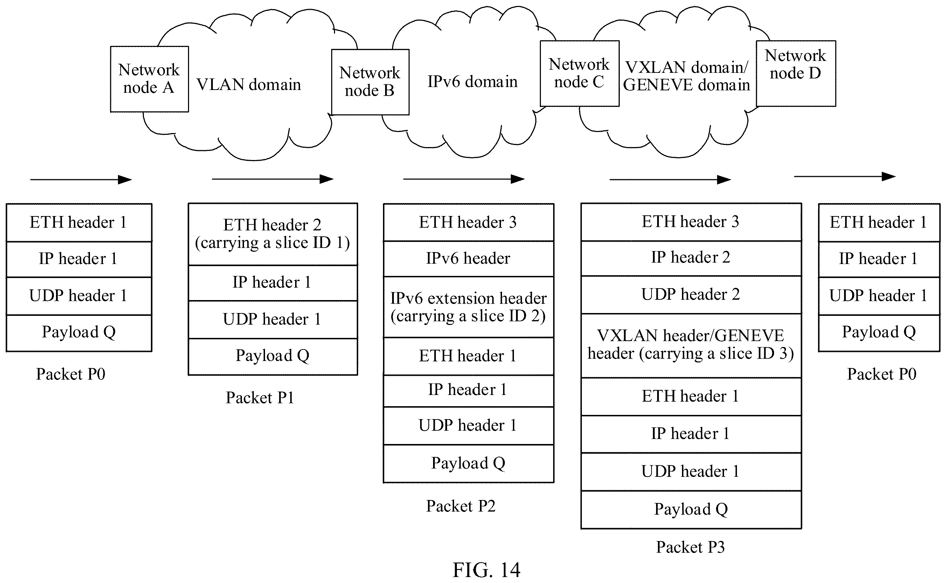

For ease of understanding the technical solutions of this application, the following describes a packet forwarding method in this application with reference to FIG. 14 by using an example in which the network domain 1 is the VLAN domain, the network domain 2 is the IPv6 domain, and the network domain 3 is the VXLAN domain/the GENEVE domain (the VXLAN domain or the GENEVE domain) in FIG. 4. As shown in FIG. 14, a network node A is an ingress node of the VLAN domain, a network node B is an egress node of the VLAN domain and an ingress node of the IPv6 domain, a network node C is an egress node of the IPv6 domain and an ingress node of the VXLAN domain/the GENEVE domain, and the network node D is an egress node of the VXLAN domain/the GENEVE domain.

As shown in FIG. 14, an original packet P0 includes a payload Q and a UDP header 1, an IP header 1, and an ETH header 1 that are sequentially encapsulated outside the payload Q. After the network node A receives the packet P0, the network node A performs VLAN encapsulation on the packet P0 to obtain a packet P1. The packet P1 includes the payload Q and the UDP header 1, the IP header 1, and an ETH header 2 that are sequentially encapsulated outside the payload Q. The ETH header 2 carries a slice ID 1, and the slice ID 1 indicates a network slice 1 in the VLAN domain. The network node A determines the network slice 1 based on the slice ID 1, and sends the packet P1 to the network node B via the network slice 1.

After the network node B receives the packet P1, the network node B determines, based on the slice ID 1 carried in the packet P1, a slice ID 2 that indicates a network slice 2 in the IPv6 domain, the network node B performs VLAN decapsulation on the packet P1 to obtain the packet P0, and the network node B performs IPv6 encapsulation on the packet P0 based on the slice ID 2 to obtain a packet P2. The packet P2 includes the payload Q and the UDP header 1, the IP header 1, the ETH header 1, an IPv6 extension header, an IPv6 header, and an ETH header 3 that are sequentially encapsulated outside the payload Q. The IPv6 extension header carries the slice ID 2, and the slice ID 2 indicates the network slice 2 in the IPv6 domain. The network node B determines the network slice 2 based on the slice ID 2, and sends the packet P2 to the network node C via the network slice 2.

After the network node C receives the packet P2, the network node C determines, based on the slice ID 2 carried in the packet P2, a slice ID 3 that indicates a network slice 3 in the VXLAN domain/the GENEVE domain, the network node C performs IPv6 decapsulation on the packet P2 to obtain the packet P0, and the network node C performs VXLAN encapsulation/GENEVE encapsulation (VXLAN encapsulation or GENEVE encapsulation) on the packet P0 based on the slice ID 3 to obtain a packet P3. The packet P3 includes the payload Q and the UDP header 1, the IP header 1, the ETH header 1, a VXLAN header/a GENEVE header (a VXLAN header or a GENEVE header), a UDP header 2, an IP header 2, and an ETH header 3 that are sequentially encapsulated outside the payload Q. The VXLAN header/the GENEVE header carries the slice ID 3, and the slice ID 3 indicates the network slice 3 in the VXLAN domain/the GENEVE domain. The network node C determines the network slice 3 based on the slice ID 3, and forwards the packet P3 to the network node D via the network slice 3.

After the network node D receives the packet P3, the network node D performs VXLAN decapsulation/GENEVE decapsulation on the packet P3 to obtain the packet P0, and the network node D forwards the packet P0.

It can be learned that, in the technical solution provided in this embodiment of this application, a slice ID may be carried in an ETH header, a VXLAN header, a GENEVE header, or an IPv6 extension header, a network node may forward a packet based on the slice ID carried in the ETH header, the VXLAN header, the GENEVE header, or the IPv6 extension header, so that the technical solution of this application may be applied to a VLAN network, a VXLAN network, a GENEVE network, and an IPv6 network. In addition, both the network node B located at a boundary between the VLAN domain and the IPv6 domain and the network node C located at a boundary between the IPv6 domain and the VXLAN domain/the GENEVE domain may perform slice ID switching, so that switching of the packet between network slices in different network domains is implemented, to implement cross-domain interworking between network slices.

In a related technology, when a data flow enters another network domain from a network domain, an egress node of the network domain terminates a network slice in the network domain for the data flow, and an ingress device in the another network domain allocates a network slice to the data flow based on traffic characteristic information of the data flow according to a flow policy. This can implement decoupling of network slices in different network domains, and facilitate independent management and maintenance of each network domain. However, when a packet crosses domains, the network node needs to perform service reidentification, which requires complex configuration and easily causes packet forwarding efficiency deterioration. In this embodiment of this application, when a packet crosses domains, the network node may switch a slice identifier based on a mapping relationship between slice identifiers, and does not need to perform service reidentification, to avoid the complex configuration and the forwarding efficiency deterioration caused because the network node performs service reidentification when the packet crosses domains, and improve packet forwarding efficiency.

In the foregoing embodiment, an example in which the first network slice and the second network slice are different network slices, and the first slice identifier and the second slice identifier are different slice identifiers is used for description. In some embodiments, a network slice and a slice identifier may be planned in a unified manner on an entire network. In this way, when a packet crosses domains, a network node located at a boundary between different network domains does not need to perform service reidentification, to avoid the complex configuration and the forwarding efficiency deterioration caused because the network node performs service reidentification when the packet crosses domains, improve the packet forwarding efficiency, and simplify maintenance and management of a network slice. For example, a network slice may be planned to cross the VLAN domain, the VXLAN domain, the GENEVE domain, the SRv6 domain, the IPv6 domain, and the like. In this way, network nodes at boundaries of the VLAN domain, the VXLAN domain, the GENEVE domain, the SRv6 domain, and the IPv6 domain do not need to perform slice identifier switching and service identification.

The foregoing describes method embodiments of this application, and the following describes apparatus embodiments of this application. Apparatus in this application may be configured to perform the methods in this application. For details that are not disclosed in the apparatus embodiments of this application, refer to the method embodiments.

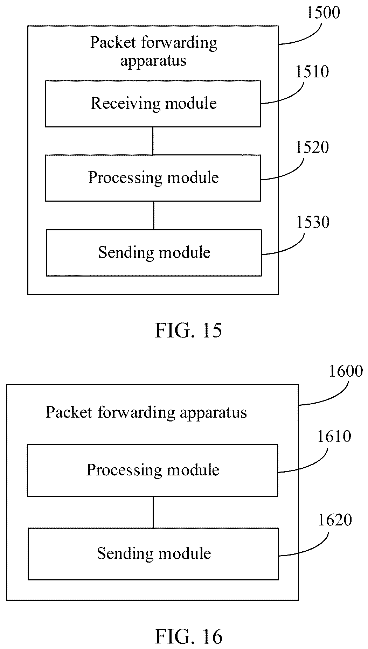

FIG. 15 shows a diagram of a packet forwarding apparatus 1500 according to an embodiment of this application. The packet forwarding apparatus 1500 is used in the first network node in the foregoing embodiments. The first network node is located at a boundary between a first network domain and a second network domain. The packet forwarding apparatus 1500 is configured to perform related steps performed by the first network node in the packet forwarding methods provided in the foregoing embodiments. For example, the packet forwarding apparatus 1500 is the first network node or a functional component in the first network node. As shown in FIG. 15, the packet forwarding apparatus 1500 includes a receiving module 1510, a processing module 1520, and a sending module 1530.

The receiving module 1510 is configured to receive a first packet from the first network domain, where the first packet includes a first packet header that matches the first network domain, and the first packet header includes a first slice identifier that indicates a first network slice. For function implementation of the receiving module 1510, refer to the descriptions in S504.

The processing module 1520 is configured to obtain a second packet based on the second network domain and the first packet, where the second packet includes a second packet header that matches the second network domain, the second packet header includes a second slice identifier that indicates a second network slice. For function implementation of the processing module 1520, refer to the descriptions in S505.

The sending module 1530 is configured to send the second packet in the second network domain based on the second slice identifier. For function implementation of the sending module 1530, refer to the descriptions in S506.

Optionally, the processing module 1520 is configured to determine the second slice identifier based on the first slice identifier and a first mapping relationship, where the first mapping relationship includes a mapping relationship between the first slice identifier and the second slice identifier; and obtain the second packet based on the first packet, the second slice identifier, and the second network domain.

Optionally, the first mapping relationship is a mapping relationship generated based on configuration information delivered by a control device, or the first mapping relationship is a statically configured mapping relationship.

Optionally, the first network domain is a VLAN domain, the first packet header is an Ethernet header, and a slice indication field in the Ethernet header is used to carry the first slice identifier. The second network domain is a VXLAN domain, the second packet is a VXLAN packet, the second packet header is a VXLAN header, and a reserved field or an extended field in the VXLAN header is used to carry the second slice identifier.

Optionally, the first network domain is a VLAN domain, the first packet header is an Ethernet header, and a slice indication field in the Ethernet header is used to carry the first slice identifier. The second network domain is a GENEVE domain, the second packet is a GENEVE packet, the second packet header is a GENEVE header, and an extended field in the GENEVE header is used to carry the second slice identifier.

Optionally, the first network domain is a VLAN domain, the first packet header is an Ethernet header, and a slice indication field in the Ethernet header is used to carry the first slice identifier. The second network domain is an SRv6 domain, the second packet is an SRv6 packet, the second packet header is an HBH or a DOH, and the HBH or the DOH is used to carry the second slice identifier.

Optionally, the first network domain is a VLAN domain, the first packet header is an Ethernet header, and a slice indication field in the Ethernet header is used to carry the first slice identifier. The second network domain is an IPv6 domain, the second packet is an IPv6 packet, the second packet header is an IPv6 extension header, and the IPv6 extension header is used to carry the second slice identifier.

Optionally, the first network domain is a VXLAN domain, the first packet is a VXLAN packet, the first packet header is a VXLAN header, and a reserved field or an extended field in the VXLAN header is used to carry the first slice identifier. The second network domain is a VLAN domain, the second packet header is an Ethernet header, and a slice indication field in the Ethernet header is used to carry the second slice identifier.

Optionally, the first network domain is a GENEVE domain, the first packet is a GENEVE packet, the first packet header is a GENEVE header, and an extended field in the GENEVE header is used to carry the first slice identifier. The second network domain is a VLAN domain, the second packet header is an Ethernet header, and a slice indication field in the Ethernet header is used to carry the second slice identifier.

Optionally, the first network domain is an SRv6 domain, the first packet is an SRv6 packet, the first packet header is an HBH or a DOH, and the HBH or the DOH is used to carry the first slice identifier. The second network domain is a VLAN domain, the second packet header is an Ethernet header, and a slice indication field in the Ethernet header is used to carry the second slice identifier.

Optionally, the first network domain is an IPv6 domain, the first packet is an IPv6 packet, the first packet header is an IPv6 extension header, and the IPv6 extension header is used to carry the first slice identifier. The second network domain is a VLAN domain, the second packet header is an Ethernet header, and a slice indication field in the Ethernet header is used to carry the second slice identifier.

In conclusion, according to the technical solution provided in this embodiment of this application, the first packet from the first network domain includes the first packet header that matches the first network domain, and the first packet header includes the first slice identifier that indicates the first network slice. The first network node at the boundary between the first network domain and the second network domain obtains the second packet based on the second network domain and the first packet and sends the second packet in the second network domain based on the second slice identifier that is in the second packet header included in the second packet and that indicates the second network slice, so that the first network node can implement switching between the first network slice in the first network domain and the second network slice in the second network domain, to implement cross-domain interworking between the first network slice and the second network slice, avoid complex configuration and forwarding efficiency deterioration caused because the network node performs service reidentification when the packet crosses domains, and improve packet forwarding efficiency. In addition, in this application, a slice identifier may be carried in a packet header such as an ETH header, a VXLAN header, a GENEVE header, an IPv6 extension header, an HBH, or a DOH, and a network node may forward a packet based on the slice identifier carried in the packet header. Therefore, the technical solutions of this application may be applied to network scenarios such as a VLAN network, a VXLAN network, a GENEVE network, an IPv6 network, and an SRv6 network.

FIG. 16 shows a diagram of another packet forwarding apparatus 1600 according to an embodiment of this application. The packet forwarding apparatus 1600 is used in the second network node in the foregoing embodiments. The second network node is located at an ingress of a first network domain. The packet forwarding apparatus 1600 is configured to perform related steps performed by the second network node in the packet forwarding method provided in the foregoing embodiments. For example, the packet forwarding apparatus 1600 is the second network node or a functional component in the second network node. As shown in FIG. 16, the packet forwarding apparatus 1600 includes a processing module 1610, and a sending module 1620.

The processing module 1610 is configured to obtain a first packet based on an original packet from user equipment, where the first packet includes a first packet header that matches the first network domain, and the first packet header includes a first slice identifier that indicates a first network slice. For function implementation of the processing module 1610, refer to the descriptions in S502.

The sending module 1620 is configured to send the first packet in the first network domain based on the first slice identifier. For function implementation of the sending module 1620, refer to the descriptions in S503.

Optionally, the sending module 1620 is configured to send, based on the first slice identifier, the first packet to a first network node located at a boundary between the first network domain and a second network domain, where the second network domain is different from the first network domain.

Optionally, the first network domain is a VLAN domain, the first packet is a VLAN packet, the first packet header is an Ethernet header, and a slice indication field in the Ethernet header is used to carry the first slice identifier.

Optionally, the first network domain is a VXLAN domain, the first packet is a VXLAN packet, the first packet header is a VXLAN header, and a reserved field or an extended field in the VXLAN header is used to carry the first slice identifier.

Optionally, the first network domain is a GENEVE domain, the first packet is a GENEVE packet, the first packet header is a GENEVE header, and an extended field in the GENEVE header is used to carry the first slice identifier.

Optionally, the first network domain is an SRv6 domain, the first packet is an SRv6 packet, the first packet header is an HBH or a DOH, and the HBH or the DOH is used to carry the first slice identifier.

Optionally, the first network domain is an IPv6 domain, the first packet is an IPv6 packet, the first packet header is an IPv6 extension header, and the IPv6 extension header is used to carry the first slice identifier.

In conclusion, according to the technical solution provided in this embodiment of this application, after obtaining the first packet, the second network node located at the ingress of the first network domain may send, based on the first slice identifier in the first packet header included in the first packet, the first packet to the first network node located at the boundary between the first network domain and the second network domain, and the first network node may obtain a second packet based on the second network domain and the first packet and send the second packet in the second network domain based on a second slice identifier that is in a second packet header included in the second packet and that indicates a second network slice, to implement switching between the first network slice in the first network domain and the second network slice in the second network domain, to implement cross-domain interworking between the first network slice and the second network slice, and avoid complex configuration and forwarding efficiency deterioration caused because the network node performs service reidentification when the packet crosses domains. In addition, in this application, a slice identifier may be carried in a packet header such as an ETH header, a VXLAN header, a GENEVE header, an IPv6 extension header, an HBH, or a DOH, and a network node may forward a packet based on the slice identifier carried in the packet header. Therefore, the technical solutions of this application may be applied to network scenarios such as a VLAN network, a VXLAN network, a GENEVE network, an IPv6 network, and an SRv6 network.

The packet forwarding apparatus provided in this embodiment of this application may alternatively be implemented by using an ASIC or a programmable logic device (programmable logic device, PLD). The PLD may be a complex programmable logic device (complex programmable logic device, CPLD), an FPGA, generic array logic (generic array logic, GAL), or any combination thereof. The methods provided in the foregoing method embodiments may also be implemented by using software. When the methods provided in the foregoing method embodiments are implemented by using software, each module in the foregoing packet forwarding apparatuses may also be a software module.

An embodiment of this application provides a packet forwarding apparatus, including a memory and a processor. The memory is configured to store a computer program. The processor is configured to execute the computer program stored in the memory, so that the packet forwarding apparatus performs all or some of the steps of the packet forwarding methods provided in the foregoing method embodiments.

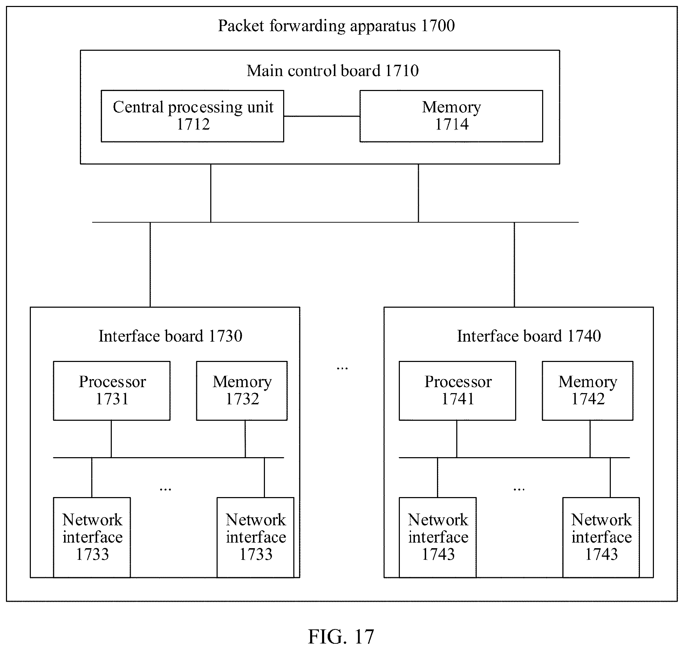

For example, FIG. 17 is a diagram of still another packet forwarding apparatus 1700 according to an embodiment of this application. The packet forwarding apparatus 1700 is a network node or some components in the network node. The packet forwarding apparatus 1700 is configured to perform the foregoing packet forwarding method embodiments. As shown in FIG. 17, the packet forwarding apparatus 1700 includes a main control board 1710, an interface board 1730, and an interface board 1740. When there are a plurality of interface boards, a switching board (not shown in FIG. 17) may be included. The switching board is configured to complete data exchange between interface boards (the interface board is also referred to as a line card or a service board).

The main control board 1710 is configured to complete functions such as system management, device maintenance, and protocol processing. The interface board 1730 and the interface board 1740 are configured to provide various service interfaces (for example, a POS interface, a GE interface, and an ATM interface), and implement packet forwarding. The main control board 1710 mainly has three types of functional units: a system management and control unit, a system clock unit, and a system maintenance unit. The main control board 1710, the interface board 1730, and the interface board 1740 are connected to a system backboard through a system bus to implement interworking. The interface board 1730 includes one or more processors 1731. The processor 1731 is configured to control and manage the interface board 1730, and communicate with a central processing unit 1712 on the main control board 1710. A memory 1732 on the interface board 1730 is configured to store a first mapping relationship and the like in the foregoing embodiments. As shown in FIG. 17, the main control board 1710 may include a memory 1714. The memory 1714 on the main control board 1710 may also be configured to store the first mapping relationship and the like. This is not limited in this embodiment of this application.

The interface board 1730 includes one or more network interfaces 1733, configured to receive and send a packet. The processor 1731 may process the packet received by the network interface 1733, for example, encapsulate a slice identifier into the packet, and convert the slice identifier carried in the packet. A specific implementation process is not described one by one herein.

It may be understood that, as shown in FIG. 17, this embodiment includes a plurality of interface boards, and uses a distributed forwarding mechanism. In this mechanism, operations on the interface board 1740 are basically similar to operations on the interface board 1730. For brevity, details are not described. In addition, it may be understood that the processor 1731 on the interface board 1730 and/or a processor 1741 on the interface board 1740 in FIG. 17 may be dedicated hardware or a chip, for example, a network processor or an application-specific integrated circuit, to implement the foregoing functions. This implementation is usually referred to as a manner of using dedicated hardware or a chip for processing on a forwarding plane. In another implementation, the processor 1731 on the interface board 1730 and/or the processor 1741 on the interface board 1740 may alternatively use a general-purpose processor, for example, a general-purpose central processing unit (central processing unit, CPU), to implement the functions described above.

In addition, it should be noted that there may be one or more main control boards. When there are a plurality of main control boards, the main control boards may include an active main control board and a standby main control board. There may be one or more interface boards. A network node with a stronger data processing capability provides a larger quantity of interface boards. In a case of a plurality of interface boards, the plurality of interface boards may communicate with each other through one or more switching boards, and load sharing and redundancy backup may be implemented by the plurality of interface boards together. In a centralized forwarding architecture, the network node may not need the switching board, and the interface board provides a function of processing service data of an entire system. In a distributed forwarding architecture, the network node includes a plurality of interface boards. Data exchange between the plurality of interface boards may be implemented by using a switching board, to provide a large-capacity data exchange and processing capability. Therefore, a data access and processing capability of a network node in the distributed architecture is better than that of a node in the centralized architecture. A specific architecture to be used depends on a networking deployment scenario, and is not limited herein.

In an optional embodiment, the memory 1732 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only Memory, CD-ROM) or another compact disc storage, an optical disc storage (including a compact optical disc, a laser disc, an optical disc, a digital versatile disc, a Blu-ray disc, and the like), a magnetic disk or another magnetic storage device, or any other medium that can be used to carry or store expected program code in a form of an instruction or a data structure and that can be accessed by a computer. However, the memory is not limited thereto. The memory 1732 may exist independently, and is connected to the processor 1731 through a communication bus. The memory 1732 may alternatively be integrated with the processor 1731.

The memory 1732 is configured to store program code, and the processor 1731 controls execution of the program code, to perform some or all of the steps of the packet forwarding methods provided in the foregoing embodiments. The processor 1731 is configured to execute the program code stored in the memory 1732. The program code may include one or more software modules. The one or more software modules may be the functional modules provided in the embodiment shown in FIG. 15 or FIG. 16. The memory 1714 may also be configured to store program code, and the central processing unit 1712 controls execution of the program code, to perform some or all of the steps of the packet forwarding methods provided in the foregoing embodiments.

In an optional embodiment, the network interface 1733 may be an apparatus that uses any transceiver, and is configured to communicate with another node or a communication network, for example, the Ethernet, a radio access network (radio access network, RAN), and a wireless local area network (wireless local area network, WLAN).

An embodiment of this application provides a packet forwarding system including a first network node and a second network node. The first network node is located at a boundary between a first network domain and a second network domain, and the second network node is located at an ingress of the first network domain. The first network node includes the packet forwarding apparatus shown in FIG. 15 or FIG. 17, and the second network node includes the packet forwarding apparatus shown in FIG. 16 or FIG. 17.

In an example, the packet forwarding system is shown in FIG. 2. The first network domain is the campus network 1, the campus network 2, or the campus network 3, and the second network domain is the internet/private network/WAN.

In another example, the packet forwarding system is shown in FIG. 3. The first network domain is the network domain 1, the second network domain is the network domain 2, the first network node is the network node B, and the second network node is the network node A.

In still another example, the packet forwarding system is shown in FIG. 4. For example, the first network domain is the network domain 1, the second network domain is the network domain 2, the first network node is the network node B, and the second network node is the network node A. For another example, the first network domain is the network domain 2, the second network domain is the network domain 3, the first network node is the network node C, and the second network node is the network node B.

An embodiment of this application provides a computer-readable storage medium. The computer-readable storage medium stores a computer program. When the computer program is executed (for example, executed by a network node or one or more processors), all or some of the steps of the method provided in the foregoing method embodiments are implemented.

An embodiment of this application provides a computer program product. The computer program product includes a program or code. When the program or the code is executed (for example, executed by a network node or one or more processors), all or some of the steps of the method provided in the foregoing method embodiments are implemented.

An embodiment of this application provides a chip. The chip includes a programmable logic circuit and/or program instructions. When running, the chip is configured to implement all or a part of the steps of the methods provided in the foregoing method embodiments.

All or a part of the foregoing embodiments may be implemented by using software, hardware, firmware, or any combination thereof. When embodiments are implemented by using the software, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, and microwave, or the like) manner. The computer-readable storage medium may be any usable medium accessible by the computer, or includes a data storage apparatus, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

It should be understood that in this application, the term "at least one" means one or more, and the term "a plurality of" means two or more than two. The term "and/or" in this application describes only an association relationship for describing associated objects and represents that three relationships may exist. For example, A and/or B may represent the following three cases: Only A exists, both A and B exist, and only B exists. In addition, for ease of clear description, in this application, words such as "first", "second", and "third" are used to distinguish between same items or similar items whose functions and purposes are basically the same. A person skilled in the art may understand that the words such as "first", "second", and "third" do not limit a quantity and an execution sequence.

Different types of embodiments such as the method embodiments and the apparatus embodiments provided in embodiments of this application may be cross-referenced. This is not limited in embodiments of this application. A sequence of operations in the method embodiments provided in embodiments of this application can be properly adjusted, and the operations can be correspondingly added or deleted based on a situation. Any variation method that can be readily figured out by a person skilled in the art within the technical scope disclosed in this application shall fall within the protection scope of this application. Therefore, details are not described again.

In the corresponding embodiments provided in this application, it should be understood that the disclosed apparatus and the like may be implemented in other composition manners. For example, the apparatus embodiments described above are merely examples. For example, division of modules is merely division of logical functions and there may be other division manners in actual application. For example, a plurality of modules or components may be combined or may be integrated to another system, or some features may be ignored or not executed.

The modules described as separate parts may or may not be physically separate, and the parts described as modules may or may not be physical modules, may be located in one position, or may be distributed on a plurality of devices. A part of or all of the modules may be selected based on actual requirements to achieve the objectives of the solutions of embodiments.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A packet forwarding method, applied to a first network node located at a boundary between a first network domain and a second network domain, wherein the method comprises:
receiving, by the first network node, a first packet from the first network domain, wherein the first packet comprises a first packet header that matches the first network domain, and the first packet header comprises a first slice identifier that indicates a first network slice;
obtaining, by the first network node, a second packet based on the second network domain and the first packet, wherein the second packet comprises a second packet header that matches the second network domain, the second packet header comprises a second slice identifier that indicates a second network slice, and the second packet header is different from the first packet header; and
sending, by the first network node, the second packet in the second network domain based on the second slice identifier.

2. The method according to claim 1, wherein the obtaining, by the first network node, a second packet based on the second network domain and the first packet comprises:
determining, by the first network node, the second slice identifier based on the first slice identifier and a first mapping relationship, wherein the first mapping relationship comprises a mapping relationship between the first slice identifier and the second slice identifier; and
obtaining, by the first network node, the second packet based on the first packet, the second slice identifier, and the second network domain.

3. The method according to claim 1 or 2, wherein the first network domain is a virtual local area network VLAN domain, the first packet header is an Ethernet header, and a slice indication field in the Ethernet header is used to carry the first slice identifier; and
the second network domain is a virtual extensible local area network VXLAN domain, the second packet is a VXLAN packet, the second packet header is a VXLAN header, and a reserved field or an extended field in the VXLAN header is used to carry the second slice identifier.

4. The method according to claim 1 or 2, wherein the first network domain is a virtual local area network VLAN domain, the first packet header is an Ethernet header, and a slice indication field in the Ethernet header is used to carry the first slice identifier; and
the second network domain is a generic network virtualization encapsulation GENEVE domain, the second packet is a GENEVE packet, the second packet header is a GENEVE header, and an extended field in the GENEVE header is used to carry the second slice identifier.

5. The method according to claim 1 or 2, wherein the first network domain is a virtual local area network VLAN domain, the first packet header is an Ethernet header, and a slice indication field in the Ethernet header is used to carry the first slice identifier; and
the second network domain is a segment routing over internet protocol version 6 IPv6 SRv6 domain, the second packet is an SRv6 packet, the second packet header is a hop-by-hop options header or a destination options header DOH, and the hop-by-hop options header or the DOH is used to carry the second slice identifier.

6. The method according to claim 1 or 2, wherein the first network domain is a virtual local area network VLAN domain, the first packet header is an Ethernet header, and a slice indication field in the Ethernet header is used to carry the first slice identifier; and
the second network domain is an internet protocol version 6 IPv6 domain, the second packet is an IPv6 packet, the second packet header is an IPv6 extension header, and the IPv6 extension header is used to carry the second slice identifier.

7. The method according to claim 1 or 2, wherein the first network domain is a virtual extensible local area network VXLAN domain, the first packet is a VXLAN packet, the first packet header is a VXLAN header, and a reserved field or an extended field in the VXLAN header is used to carry the first slice identifier; and
the second network domain is a virtual local area network VLAN domain, the second packet header is an Ethernet header, and a slice indication field in the Ethernet header is used to carry the second slice identifier.

8. The method according to claim 1 or 2, wherein the first network domain is a generic network virtualization encapsulation GENEVE domain, the first packet is a GENEVE packet, the first packet header is a GENEVE header, and an extended field in the GENEVE header is used to carry the first slice identifier; and
the second network domain is a virtual local area network VLAN domain, the second packet header is an Ethernet header, and a slice indication field in the Ethernet header is used to carry the second slice identifier.

9. The method according to claim 1 or 2, wherein the first network domain is a segment routing over internet protocol version 6 IPv6 SRv6 domain, the first packet is an SRv6 packet, the first packet header is a hop-by-hop options header or a destination options header DOH, and the hop-by-hop options header or the DOH is used to carry the first slice identifier; and
the second network domain is a virtual local area network VLAN domain, the second packet header is an Ethernet header, and a slice indication field in the Ethernet header is used to carry the second slice identifier.

10. The method according to claim 1 or 2, wherein the first network domain is an internet protocol version 6 IPv6 domain, the first packet is an IPv6 packet, the first packet header is an IPv6 extension header, and the IPv6 extension header is used to carry the first slice identifier; and
the second network domain is a virtual local area network VLAN domain, the second packet header is an Ethernet header, and a slice indication field in the Ethernet header is used to carry the second slice identifier.

11. A packet forwarding method, applied to a second network node located at an ingress of a first network domain, wherein the method comprises:
obtaining, by the second network node, a first packet based on an original packet from user equipment, wherein the first packet comprises a first packet header that matches the first network domain, and the first packet header comprises a first slice identifier that indicates a first network slice; and
sending, by the second network node, the first packet in the first network domain based on the first slice identifier.

12. The method according to claim 11, wherein the sending, by the second network node, the first packet in the first network domain based on the first slice identifier comprises:
sending, by the second network node based on the first slice identifier, the first packet to a first network node located at a boundary between the first network domain and a second network domain, wherein the second network domain is different from the first network domain.

13. The method according to claim 11 or 12, wherein the first network domain is a virtual local area network VLAN domain, the first packet header is an Ethernet header, and a slice indication field in the Ethernet header is used to carry the first slice identifier.

14. The method according to claim 11 or 12, wherein the first network domain is a virtual extensible local area network VXLAN domain, the first packet is a VXLAN packet, the first packet header is a VXLAN header, and a reserved field or an extended field in the VXLAN header is used to carry the first slice identifier.

15. The method according to claim 11 or 12, wherein the first network domain is a generic network virtualization encapsulation GENEVE domain, the first packet is a GENEVE packet, the first packet header is a GENEVE header, and an extended field in the GENEVE is used to carry the first slice identifier.

16. The method according to claim 11 or 12, wherein the first network domain is a segment routing over internet protocol version 6 IPv6 SRv6 domain, the first packet is an SRv6 packet, the first packet header is a hop-by-hop options header or a destination options header DOH, and the hop-by-hop options header or the DOH is used to carry the first slice identifier.

17. The method according to claim 11 or 12, wherein the first network domain is an internet protocol version 6 IPv6 domain, the first packet is an IPv6 packet, the first packet header is an IPv6 extension header, and the IPv6 extension header is used to carry the first slice identifier.

18. A packet forwarding apparatus, used in a first network node located at a boundary between a first network domain and a second network domain, wherein the apparatus comprises:
a receiving module, configured to receive a first packet from the first network domain, wherein the first packet comprises a first packet header that matches the first network domain, and the first packet header comprises a first slice identifier that indicates a first network slice;
a processing module, configured to obtain a second packet based on the second network domain and the first packet, wherein the second packet comprises a second packet header that matches the second network domain, the second packet header comprises a second slice identifier that indicates a second network slice, and the second packet header is different from the first packet header; and
a sending module, configured to send the second packet in the second network domain based on the second slice identifier.

19. The apparatus according to claim 18, wherein the processing module is configured to:
determine the second slice identifier based on the first slice identifier and a first mapping relationship, wherein the first mapping relationship comprises a mapping relationship between the first slice identifier and the second slice identifier; and
obtain the second packet based on the first packet, the second slice identifier, and the second network domain.

20. The apparatus according to claim 18 or 19, wherein the first network domain is a virtual local area network VLAN domain, the first packet header is an Ethernet header, and a slice indication field in the Ethernet header is used to carry the first slice identifier; and
the second network domain is a virtual extensible local area network VXLAN domain, the second packet is a VXLAN packet, the second packet header is a VXLAN header, and a reserved field or an extended field in the VXLAN header is used to carry the second slice identifier.

21. The apparatus according to claim 18 or 19, wherein the first network domain is a virtual local area network VLAN domain, the first packet header is an Ethernet header, and a slice indication field in the Ethernet header is used to carry the first slice identifier; and
the second network domain is a generic network virtualization encapsulation GENEVE domain, the second packet is a GENEVE packet, the second packet header is a GENEVE header, and an extended field in the GENEVE header is used to carry the second slice identifier.

22. The apparatus according to claim 18 or 19, wherein the first network domain is a virtual local area network VLAN domain, the first packet header is an Ethernet header, and a slice indication field in the Ethernet header is used to carry the first slice identifier; and
the second network domain is a segment routing over internet protocol version 6 IPv6 SRv6 domain, the second packet is an SRv6 packet, the second packet header is a hop-by-hop options header or a destination options header DOH, and the hop-by-hop options header or the DOH is used to carry the second slice identifier.

23. The apparatus according to claim 18 or 19, wherein the first network domain is a virtual local area network VLAN domain, the first packet header is an Ethernet header, and a slice indication field in the Ethernet header is used to carry the first slice identifier; and
the second network domain is an internet protocol version 6 IPv6 domain, the second packet is an IPv6 packet, the second packet header is an IPv6 extension header, and the IPv6 extension header is used to carry the second slice identifier.

24. The apparatus according to claim 18 or 19, wherein the first network domain is a virtual extensible local area network VXLAN domain, the first packet is a VXLAN packet, the first packet header is a VXLAN header, and a reserved field or an extended field in the VXLAN header is used to carry the first slice identifier; and
the second network domain is a virtual local area network VLAN domain, the second packet header is an Ethernet header, and a slice indication field in the Ethernet header is used to carry the second slice identifier.

25. The apparatus according to claim 18 or 19, wherein the first network domain is a generic network virtualization encapsulation GENEVE domain, the first packet is a GENEVE packet, the first packet header is a GENEVE header, and an extended field in the GENEVE header is used to carry the first slice identifier; and
the second network domain is a virtual local area network VLAN domain, the second packet header is an Ethernet header, and a slice indication field in the Ethernet header is used to carry the second slice identifier.

26. The apparatus according to claim 18 or 19, wherein the first network domain is a segment routing over internet protocol version 6 IPv6 SRv6 domain, the first packet is an SRv6 packet, the first packet header is a hop-by-hop options header or a destination options header DOH, and the hop-by-hop options header or the DOH is used to carry the first slice identifier; and
the second network domain is a virtual local area network VLAN domain, the second packet header is an Ethernet header, and a slice indication field in the Ethernet header is used to carry the second slice identifier.

27. The apparatus according to claim 18 or 19, wherein the first network domain is an internet protocol version 6 IPv6 domain, the first packet is an IPv6 packet, the first packet header is an IPv6 extension header, and the IPv6 extension header is used to carry the first slice identifier; and
the second network domain is a virtual local area network VLAN domain, the second packet header is an Ethernet header, and a slice indication field in the Ethernet header is used to carry the second slice identifier.

28. A packet forwarding apparatus, used in a second network node located at an ingress of a first network domain, wherein the apparatus comprises:
a processing module, configured to obtain a first packet based on an original packet from user equipment, wherein the first packet comprises a first packet header that matches the first network domain, and the first packet header comprises a first slice identifier that indicates a first network slice; and
a sending module, configured to send the first packet in the first network domain based on the first slice identifier.

29. The apparatus according to claim 28, wherein the sending module is configured to send, based on the first slice identifier, the first packet to a first network node located at a boundary between the first network domain and a second network domain, wherein the second network domain is different from the first network domain.

30. The apparatus according to claim 28 or 29, wherein the first network domain is a virtual local area network VLAN domain, the first packet header is an Ethernet header, and a slice indication field in the Ethernet header is used to carry the first slice identifier.

31. The apparatus according to claim 28 or 29, wherein the first network domain is a virtual extensible local area network VXLAN domain, the first packet is a VXLAN packet, the first packet header is a VXLAN header, and a reserved field or an extended field in the VXLAN header is used to carry the first slice identifier.

32. The apparatus according to claim 28 or 29, wherein the first network domain is a generic network virtualization encapsulation GENEVE domain, the first packet is a GENEVE packet, the first packet header is a GENEVE header, and an extended field in the GENEVE is used to carry the first slice identifier.

33. The apparatus according to claim 28 or 29, wherein the first network domain is a segment routing over internet protocol version 6 IPv6 SRv6 domain, the first packet is an SRv6 packet, the first packet header is a hop-by-hop options header or a destination options header **DOH,** and the hop-by-hop options header or the **DOH** is used to carry the first slice identifier.

34. The apparatus according to claim 28 or 29, wherein the first network domain is an internet protocol version 6 IPv6 domain, the first packet is an IPv6 packet, the first packet header is an IPv6 extension header, and the IPv6 extension header is used to carry the first slice identifier.
